# EUROPÄISCHE PATENTSCHRIFT

(11) **EP 4 103 840 B1**
(45) Veröffentlichungstag und Bekanntmachung des Hinweises auf die Patenterteilung: **02.04.2025**
(21) Anmeldenummer: 21704529.3
(22) Anmeldetag: 10.02.2021
(51) Int. Cl.: F04B 49/20, F04B 49/06, F04B 27/04, F04B 27/053, F04B 27/067, F04B 49/03, F04B 49/035

(54) **KÄLTEMITTELVERDICHTER**
REFRIGERANT COMPRESSOR
COMPRESSEUR DE RÉFRIGÉRANT

(30) Priorität: 14.02.2020 DE 102020103975
(43) Veröffentlichungstag der Anmeldung: 21.12.2022
(73) Patentinhaber: BITZER Kühlmaschinenbau GmbH, 71065 Sindelfingen (DE)
(72) Erfinder: MANNEWITZ, Jens, 04435 Schkeuditz (DE); FUHRER, Tobias, 72108 Rottenburg (DE)
(74) Vertreter: Hoeger, Stellrecht & Partner Patentanwälte mbB
(86) Internationale Anmeldenummer: PCT/EP2021/053211
(87) Internationale Veröffentlichungsnummer: WO 2021/160672

(56) Entgegenhaltungen:
- EP-A1- 1 710 435
- WO-A1-2018/065071
- DE-A1- 102013 203 268
- DE-A1- 19 918 161

## Beschreibung

Die Erfindung betrifft einen Kältemittelverdichter für Kälteanlagen, umfassend einen Elektromotor, mindestens zwei Zylinderbänke, von denen jede mindestens eine Zylindereinheit mit jeweils einem Zylindergehäuse und einen von dem Elektromotor angetriebenen und oszillierend bewegbaren Kolben aufweist, sowie einen jeder Zylinderbank zugeordneten Zylinderkopf mit einer von einem Einlassstrom durchströmten Einlasskammer und einer von einem Auslassstrom durchsetzten Auslasskammer und eine mechanische Leistungssteuereinheit zum Aktivieren und Deaktivieren der jeweiligen Zylinderbank, um deren Kältemittelausstoß zu aktivieren oder deaktivieren.

Derartige Kältemittelverdichter sind aus dem Stand der Technik, beispielsweise der WO 2018/065071 A1 bekannt.

Bei diesen Kältemittelverdichtern besteht das Problem, diese möglichst optimal zu betreiben.

Diese Aufgabe wird bei einem Kältemittelverdichter der eingangs beschriebenen Art erfindungsgemäß dadurch gelöst, dass der Kältemittelverdichter zum Betrieb in Teilleistungszuständen in mindestens zwei verschiedenen Betriebsmodi, von denen jeder eine von den anderen Betriebsmodi unterschiedliche Aktivierung oder Deaktivierung der Zylinderbänke vorsieht, betreibbar ist, dass der Kältemittelverdichter einen Frequenzumrichter zur Drehzahlsteuerung des Elektromotors umfasst, dass dem Kältemittelverdichter eine Betriebszustandssteuerung zugeordnet ist, welche entsprechend einem dieser zugeführten Leistungsanforderungssignal für den Betrieb des Kältemittelverdichters in dem diesem Leistungsanforderungssignal entsprechenden Teilleistungszustand den Kältemittelverdichter in einem aus den mindestens zwei verschiedenen Betriebsmodi ausgewählten Betriebsmodus sowie einer an den ausgewählten Betriebsmodus angepassten Drehzahl des Elektromotors zur Realisierung dieses Teilleistungszustandes betreibt.

Der Vorteil der erfindungsgemäßen Lösung ist darin zu sehen, dass für den Betrieb des Kältemittelverdichters in den Teilleistungszuständen mindestens zwei, vorzugsweise mehrere Betriebsmodi zur Verfügung stehen, mit welchen es der Betriebszustandssteuerung möglich ist, den Kältemittelverdichter optimiert zu betreiben, wobei in jedem Betriebsmodus durch Variation der Drehzahl, insbesondere stufenlose Variation der Drehzahl, des Elektromotors zwischen einer Minimaldrehzahl und einer Maximaldrehzahl eine Vielzahl von Teilleistungszuständen realisiert werden kann.

Insbesondere kann dadurch im Betriebsmodus mit dem höchsten Kältemittelanstoß und im Betriebsmodus mit dem niedrigsten Kältemittelausstoß durch Variation der Drehzahl zwischen der Maximaldrehzahl und der Minimaldrehzahl der maximale Teilleistungszustand beziehungsweise der minimale Teilleistungszustand realisiert werden.

Somit steht durch die Kombination der Auswahl eines Betriebsmodus mit der insbesondere stufenlosen Auswahl der Drehzahl eine Vielzahl von Teilleistungszuständen zur Verfügung.

Besonders vorteilhaft ist die erfindungsgemäße Lösung beim Einsatz von CO₂ als Kältemittel.

Bei den verschiedenen Betriebsmodi ist vorzugsweise vorgesehen, dass die Betriebszustandssteuerung den Kältemittelverdichter in einem ersten Betriebsmodus mit Aktivierung aller Zylinderbänke und mit einer Anpassung der Drehzahl an den ersten Betriebsmodus betreibt, wobei dieser erste Betriebsmodus insbesondere für Betriebszustände in einem Teilleistungsbereich nahe der Maximalleistung einsetzbar ist.

Ferner ist vorzugsweise noch vorgesehen, dass die Betriebszustandssteuerung den Kältemittelverdichter in mindestens einem weiteren Betriebsmodus bei Deaktivierung mindestens einer der Zylinderbänke und Aktivierung mindestens einer der Zylinderbänke sowie mit einer Anpassung der Drehzahl des Elektromotors an diesen Betriebsmodus betreibt.

Das heißt, dass in diesem Fall für Teilleistungsbereiche, die insbesondere für die Realisierung eines Leistungsanforderungssignals mit mittlerer oder niedriger Leistung geeignet sind, einen Betriebsmodus einsetzt, bei welchem nur ein Teil der Zylinderbänke aktiv ist.

Besonders günstig ist es bei der erfindungsgemäßen Lösung, wenn die Betriebszustandssteuerung bei Teilleistungszuständen, die durch mehrere der Betriebsmodi realisierbar sind, den Betriebsmodus auswählt, der zu dem größten Gütegrad oder zu dem höchsten COP oder zu der niedrigsten elektrischen Leistungsaufnahme des Elektromotors in diesem Teilleistungszustand führt.

Diese Auswahl kann beispielsweise dadurch realisiert werden, dass die Betriebszustandssteuerung für jeden der Betriebsmodi und jeden der Teilleistungszustände Informationen zum Gütegrad oder zum COP oder zur elektrischen Leistungsaufnahme des Elektromotors hinterlegt hat.

Alternativ dazu sieht eine vorteilhafte Lösung vor, dass die Betriebszustandssteuerung für die jeweils zur Realisierung eines Teilleistungszustands möglichen Betriebsmodi den Gütegrad oder den COP oder die elektrische Leistungsaufnahme des Elektromotors ermittelt und durch Vergleich der ermittelten Gütegrade oder COP's oder der elektrischen Leistungsaufnahme den Betriebsmodus auswählt.

Insbesondere ist in diesem Fall vorgesehen, dass die Steuerung für die Ermittlung des Gütegrads oder des COP's für jeden Betriebsmodus Daten abgespeichert hat oder während des Betriebs, insbesondere durch Erfassung der elektrischen Leistungsaufnahme des Elektromotors, abspeichert und zukünftig einsetzt.

Darüber hinaus ist ebenfalls von Vorteil, wenn die Ermittlung des Gütegrades oder COP oder der elektrischen Leistungsaufnahme durch die Betriebszustandssteuerung durch Erfassung eines Saugdrucks und/oder des Hochdrucks am Kältemittelverdichter erfolgt, da diese Parameter den Gütegrad des jeweiligen Betriebsmodus bei dem jeweiligen Teilleistungszustand beeinflussen.

Ferner ist vorzugsweise vorgesehen, dass die Steuerung zur Ermittlung des Gütegrades oder des COP oder der elektrischen Leistungsaufnahme das Kältemittel, den Teilleistungszustand, die Leistungsaufnahme und/oder die Drehzahl des Elektromotors heranzieht.

Ob die Ermittlung des Gütegrades oder COP oder der elektrischen Leistungsaufnahme dadurch erfolgt, dass die Steuerung bereits hinterlegte Gütegrade oder COP's oder elektrische Leistungsaufnahme abhängig vom Saugdruck und/oder Hochdruck und/oder Kältemittel und/oder Teilleistungszustand und/oder Leistungsaufnahme ausliest oder diese durch Berechnung ermittelt, ist insbesondere von der Konzeption der Betriebszustandssteuerung und der Komplexität sowie der Präzision bei der Ermittlung des Gütegrades oder des COP oder der elektrischen Leistungsaufnahme abhängig.

Beispielsweise besteht zur Vereinfachung der Vorgehensweise die Möglichkeit, dass zur Ermittlung des Gütegrades oder COP der Betriebsmodi die zu realisierenden Teilleistungszustände in oberhalb eines Grenzwerts und unterhalb eines Grenzwerts liegende Teilleistungszustände unterteilt werden und dass bei oberhalb des Grenzwerts liegenden Teilleistungszuständen bei den Betriebsmodi, die eine höhere Drehzahl des Elektromotors erfordern, ein höherer Gütegrad oder COP oder eine niedrigere elektrische Leistungsaufnahme angenommen wird und somit diese ausgewählt werden, und dass bei unterhalb eines Grenzwerts liegenden Teilleistungszuständen bei den Betriebsmodi, die eine niedrigere Drehzahl des Elektromotors erfordern, ein höherer Gütegrad oder COP oder eine niedrigere elektrische Leistungsaufnahme angenommen wird und somit diese ausgewählt werden.

Hinsichtlich der Art der Deaktivierung und Aktivierung der Zylinderbänke sind ebenfalls die unterschiedlichsten Lösungen denkbar.

So ist bei einer vorteilhaften Lösung vorgesehen, dass die Betriebszustandssteuerung bei einer ersten Art von Betriebsmodi den jeweiligen Betriebsmodus mit fest vorgegebener Deaktivierung und Aktivierung der Zylinderbänke zum Erreichen des durch das Leistungsanforderungssignal geforderten Teilleistungszustandes permanent beibehält.

Das heißt, dass bei der ersten Art von Betriebsmodi die Aktivierung und Deaktivierung der Zylinderbänke bei der Realisierung eines Teilleistungszustands permanent beibehalten wird und sich nicht ändert.

Eine weitere vorteilhafte Lösung sieht jedoch vor, dass die Betriebszustandssteuerung den Kältemittelverdichter in mindestens einem einer zweiten Art von Betriebsmodi entsprechenden Betriebsmodus durch getaktete Deaktivierung und Aktivierung mindestens einer der Zylinderbänke in definierten Schaltintervallen betreibt, wobei in diesem Betriebsmodus insbesondere die zeitanteilige Deaktivierung und Aktivierung mindestens einer der Zylinderbänke in den Schaltintervallen bei der Realisierung des jeweiligen Teilleistungszustandes konstant ist.

Das heißt, dass bei einem Betriebsmodus der zweiten Art während eines Schaltintervalls in einem bestimmten Zeitraum eine Deaktivierung und in dem jeweils anderen Zeitraum eine Aktivierung der Zylinderbank erfolgt und der Betriebsmodus diese zeitanteilige Deaktivierung und Aktivierung bei der Realisierung des jeweiligen Teilleistungszustandes konstant beibehält.

Im Zusammenhang mit der bisherigen Erläuterung der erfindungsgemäßen Lösung wurde nicht näher darauf eingegangen, wie die Aktivierung und Deaktivierung jeder Zylinderbank erfolgen soll.

So sieht eine vorteilhafte Lösung vor, dass die Aktivierung und Deaktivierung jeder Zylinderbank mittels einer von der Betriebszustandssteuerung gesteuerten mechanischen Leistungssteuereinheit erfolgt.

Das heißt, dass die Betriebszustandssteuerung die mechanische Leistungssteuereinheit jeder der Zylinderbänke ansteuert.

Dabei kann die mechanische Leistungssteuereinheit in dem Kältemittelverdichter grundsätzlich an beliebiger Stelle angeordnet sein.

Besonders günstig ist es, wenn die mechanische Leistungssteuereinheit einem Zylinderkopf der Zylinderbank zugeordnet ist.

Darüber hinaus ist vorteilhafter Weise vorgesehen, dass die mechanische Leistungssteuereinheit zum Aktivieren oder Deaktivieren der jeweiligen Zylinderbank einen Einlassstrom in die Einlasskammer des Zylinderkopfes steuert.

Das heißt, dass die Leistungssteuereinheit den Einlassstrom in die Einlasskammer unterbricht und damit die jeweilige Zylinderbank deaktiviert oder umgekehrt.

Eine andere vorteilhafte Lösung sieht vor, dass die Leistungssteuereinheit zum Aktivieren oder Deaktivieren der jeweiligen Zylinderbank in dem Zylinderkopf die Auslasskammer mit der Einlasskammer verbindet.

Das heißt, dass die Leistungssteuereinheit in diesem Fall die Auslasskammer und die Einlasskammer kurzschließt, so dass der Antrieb der Zylinderbank ohne Drehmomentschwankungen möglich ist, eine Lösung die sich insbesondere für CO₂ als Kältemittel eignet.

Hinsichtlich der Betriebszustandssteuerung ist beispielsweise vorgesehen, dass diese eine vom Frequenzumrichter separate Steuerung sein kann.

Das heißt, dass beispielsweise bei Integration des Frequenzumrichters in den Kältemittelverdichter die Betriebszustandssteuerung separat, beispielsweise am Kältemittelverdichter oder unabhängig von diesem, angeordnet ist.

Alternativ dazu ist es aber auch möglich, dass die Betriebszustandssteuerung in einem den Frequenzumrichter aufnehmenden Gehäuse angeordnet ist, welches im einfachsten Fall am Verdichtergehäuse oder in dem Verdichtergehäuse angeordnet ist.

Eine vorteilhafte Ausführung des Kältemittelverdichter sieht vor, dass die Zylinderbänke in Parallelbetrieb arbeiten.

Eine günstige Leistungsausbeute ist insbesondere dann erreichbar, wenn der Kältemittelverdichter pro Zylinderbank mindestens zwei Zylindereinheiten aufweist.

Die Zahl der Betriebsmodi lässt sich möglichst groß gestalten, wenn der Kältemittelverdichter mehr als zwei Zylinderbänke aufweist.

Darüber hinaus betrifft die Erfindung eine Kälteanlage, umfassend einen Kältemittelverdichter, einen hochdruckseitigen Wärmeübertrager, ein Expansionsorgan, und einen niederdruckseitigen Wärmeübertrager. Erfindungsgemäß ist bei einer derartigen Kälteanlage zur Optimierung von deren Betrieb vorgesehen, dass der Kältemittelverdichter nach einem der voranstehenden Ausführungsformen ausgebildet ist.

Ferner ist vorzugsweise vorgesehen, dass die Kälteanlage eine Anlagensteuerung aufweist, welche das Leistungsanforderungssignal erzeugt, beispielsweise je nach dem zu kühlenden Gut.

In diesem Fall besteht auch die Möglichkeit, dass die Betriebszustandssteuerung in einem Gehäuse der Anlagensteuerung angeordnet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung einer erfindungsgemäßen Kälteanlage;
- Fig. 2: einen Querschnitt längs Linie 2-2 durch ein Kältemittelverdichter der erfindungsgemäßen Kälteanlage;
- Fig. 3: einen Schnitt durch ein mechanische Leistungssteuerungseinheit integriert in einen Zylinderkopf in der geöffneten Stellung eines Ventilkörpers der mechanischen Leistungssteuerungseinheit;
- Fig. 4: einen Schnitt ähnlich Fig. 3 in einer geschlossenen Stellung des Ventilkörpers der mechanischen Leistungssteuerungseinheit;
- Fig. 5: eine schematische Darstellung eines Schaltintervalls umfassend ein Öffnungsintervall und ein Schließintervall;
- Fig. 6: eine schematische Darstellung eines Verhaltens der Temperatur des niederdruckseitigen Wärmeübertragers in der Kälteanlage bei Unterbrechung der Verdichtung von Kältemittel;
- Fig. 7: ein Ablaufschema zur Darstellung der erfindungsgemäßen Vorgehensweise;
- Fig. 8: eine Darstellung der Leistungszustände des Kältemittelverdichters gemäß Fig. 2 in einem ersten und einem zweiten Betriebsmodus;
- Fig. 9: eine Darstellung eines zweiten Ausführungsbeispiels eines Kältemittelverdichters, dessen Aufbauprinzip dem des ersten Ausführungsbeispiels entspricht;
- Fig. 10: eine Darstellung der Leistungszustände des Kältemittelverdichters gemäß Fig. 9 in einem ersten, einem zweiten und einem dritten Betriebsmodus;

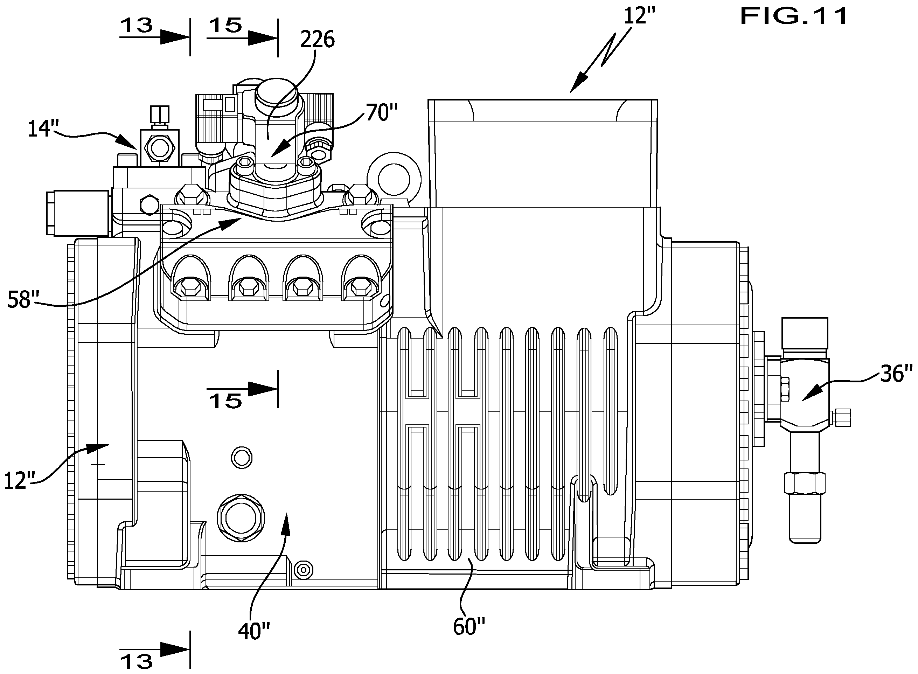

- Fig. 11: eine Seitenansicht eines dritten Ausführungsbeispiels eines erfindungsgemäßen Kältemittelverdichters;

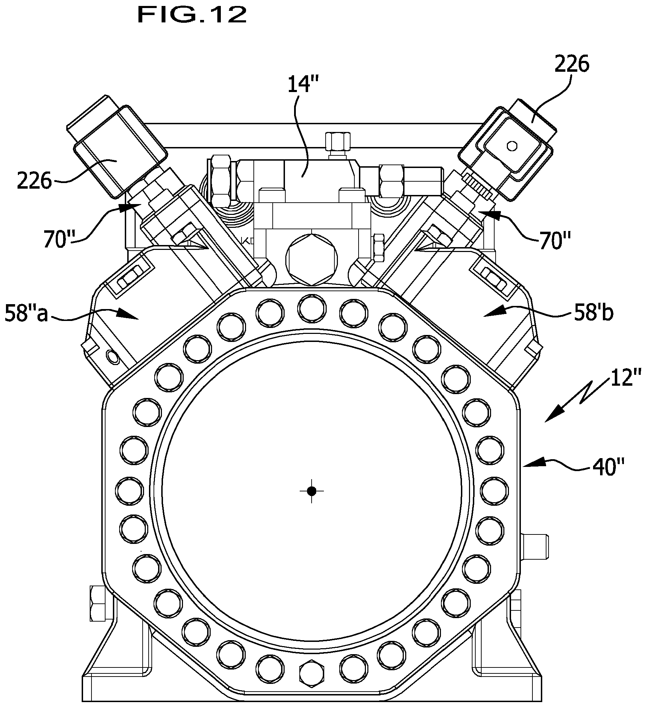

- Fig. 12: eine Frontansicht des dritten Ausführungsbeispiels des erfindungsgemäßen Kältemittelverdichters;
- Fig. 13: einen halbseitig versetzten Schnitt längs Linie 13-13 in Fig. 11;

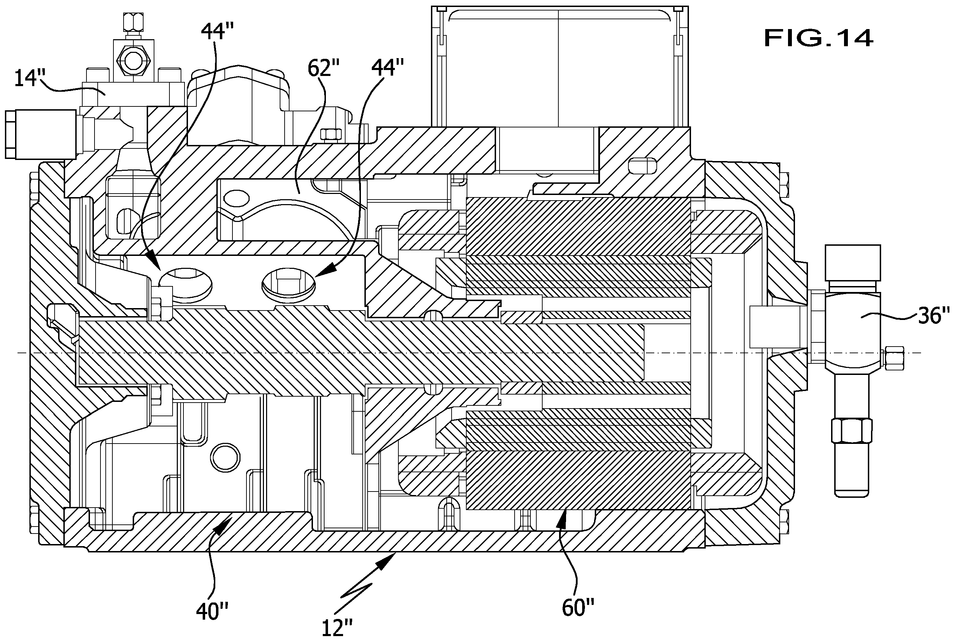

- Fig. 14: einen Längsschnitt durch das dritte Ausführungsbeispiel des erfindungsgemäßen Kältemittelverdichters;
- Fig. 15: einen Schnitt längs Linie 15-15 in Fig. 11 bei einem offenen Verbindungskanal zwischen Einlasskammer und Auslasskammer und
- Fig. 16: einen Schnitt ähnlich Fig. 15 bei geschlossenen Verbindungskanal zwischen der Auslasskammer und der Einlasskammer.

Ein Ausführungsbeispiel einer als Ganzes mit 10 bezeichneten erfindungsgemäßen Kälteanlage, umfasst einen Kältemittelverdichter 12, von dessen Hochdruckanschluss 14 eine Leitung 16 zu einem als Ganzes mit 18 bezeichneten hochdruckseitigen Wärmeübertrager führt, in welchem das verdichtete Kältemittel durch Abfuhr von Wärme zu einer Wärmesenke, beispielsweise umgewälzte Umgebungsluft oder andere kühlende Medien, kondensiert.

Von dem hochdruckseitigen Wärmeübertrager 18 strömt flüssiges Kältemittel in einer Leitung 20 zu einem Sammler 22, in welchem sich das flüssige Kältemittel sammelt und von welchem ausgehend dieses dann über eine Leitung 28 zu einem Expansionsventil 30 für einen niederdruckseitigen Wärmeübertrager 32 strömt.

Nach Durchströmen des niederdruckseitigen Wärmeübertragers 32 strömt das verdampfte Kältemittel über eine Leitung 34 zu einem Niederdruckanschluss 36 des Kältemittelverdichters 12.

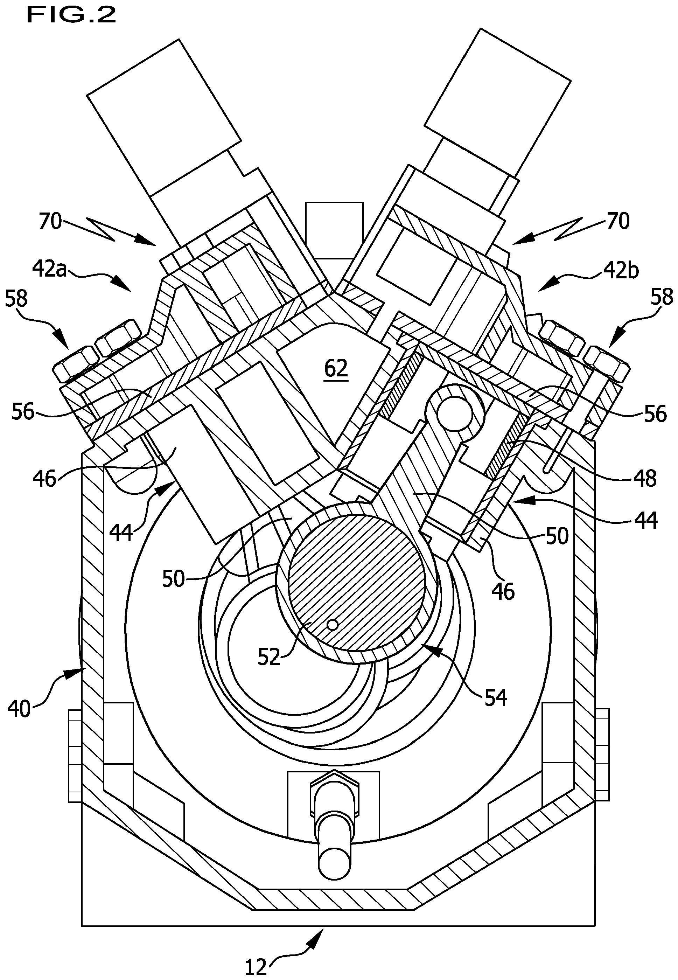

Wie in Fig. 2 dargestellt, ist der erfindungsgemäße Kältemittelverdichter 12 als Hubkolbenverdichter ausgebildet und umfasst ein Verdichtergehäuse 40, in welchem beispielsweise zwei V-fömig zueinander angeordnete, parallel arbeitende Zylinderbänke 42a und 42b vorgesehen sind, von denen jede mindestens eine, insbesondere zwei oder mehr Zylindereinheiten 44 umfasst.

Jede dieser Zylindereinheiten 44 ist gebildet aus einem Zylindergehäuse 46, in welchem ein Kolben 48 dadurch oszillierend bewegbar ist, dass der Kolben 48 durch ein Pleuel 50 antreibbar ist, das seinerseits auf einem Exzenter 52 einer Exzenterwelle 54 sitzt oder von einer Kurbelwelle angetrieben ist, die beispielsweise durch einen Elektromotor 60 angetrieben ist, der als ein Synchron- oder Asynchronmotor ausgebildet sein kann.

Das Zylindergehäuse 46 jeder der Zylindereinheiten 44 wird durch eine Ventilplatte 56 abgeschlossen, auf welcher ein Zylinderkopf 58 angeordnet ist.

Vorzugsweise überdeckt dabei die Ventilplatte 56 nicht nur ein Zylindergehäuse 46 einer Zylindereinheit 44, sondern sämtliche Zylindergehäuse 46 der jeweiligen Zylinderbank 42, und in gleicher Weise übergreift der Zylinderkopf 58 ebenfalls sämtliche Zylindergehäuse 46 der jeweiligen Zylinderbank 42.

Das Verdichtergehäuse 40 umfasst ferner noch einen mit dem Niederdruckanschluss 36 in Verbindung stehenden Einlasskanal 62, welcher beispielsweise in dem Verdichtergehäuse 40 integriert ist.

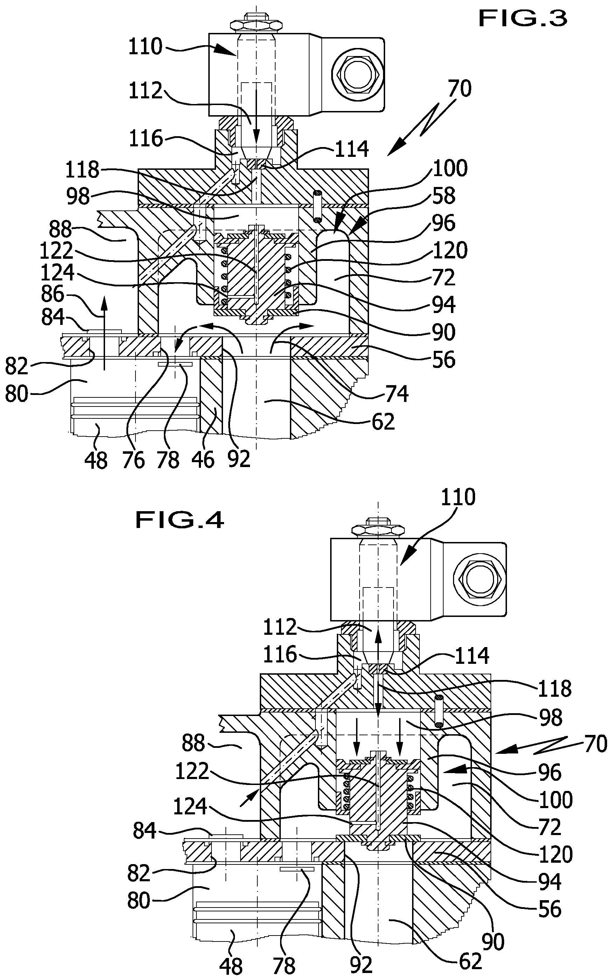

Wie in Fig. 3 vergrößert dargestellt, ist mindestens einer Zylinderbank 42, in der Zeichnung jeder Zylinderbank 42, ein als Ganzes mit 70 bezeichneten mechanischen Leistungssteuerungseinheit zugeordnet, welches dazu dient, einen von dem Einlasskanal 62 in den jeweiligen Zylinderkopf 58, und zwar in eine Einlasskammer 72 desselben, durch die Ventilplatte 56 hindurchtretenden Einlassstrom 74 von Kältemittel zuzulassen, um somit die jeweilige Zylinderbank 42 zu aktivieren, oder zu unterbrechen, um somit die jeweilige Zylinderbank 42 zu deaktivieren.

Ist die mechanische Leistungssteuerungseinheit 70 geöffnet - wie in Fig. 3 dargestellt - so hat der Einlassstrom 74 die Möglichkeit, über eine in der Ventilplatte 56 vorgesehene Einlassöffnung 76 und ein an der Ventilplatte 56 vorgesehenes Einlassventil 78 in eine von dem jeweiligen Kolben 48 und dem jeweiligen Zylindergehäuse 46 sowie der Ventilplatte 56 begrenzte Zylinderkammer 80 einzutreten, um in dieser durch die oszillierende Bewegung des Kolbens 48 verdichtet zu werden, so dass über eine Auslassöffnung 82 und ein Auslassventil 84 ein Auslassstrom 86 aus der Zylinderkammer 80 austritt und in eine Auslasskammer 88 des Zylinderkopfes 58 eintritt.

Die mechanische Leistungssteuerungseinheit 70 ist beispielsweise als Servoventil ausgebildet, welches in dem Zylinderkopf 58 integriert ist und einen Ventilkörper 90 aufweist, mit welchem eine in der Ventilplatte 56 vorgesehene Einströmöffnung 92 der Einlasskammer 72 verschließbar ist.

Der Ventilkörper 90 ist ferner an einem Schaltkolben 94 angeordnet, welcher in einem Schaltzylindergehäuse 96 geführt ist, so dass der Schaltkolben 94 durch einen in einer Schaltzylinderkammer 98 vorliegenden Druck in Richtung der Ventilplatte 56 bewegbar ist, um die Einströmöffnung 92 in derselben zu verschließen.

Eine aus dem Schaltzylindergehäuse 96, dem Schaltkolben 94 und der Schaltzylinderkammer 98 gebildete Schaltzylindereinheit 100, die in den Zylinderkopf 58 integriert ist, ist dabei über ein Steuerventil 110 steuerbar, welches einen elektromagnetisch bewegbaren Steuerkolben 112 umfasst, mit welchem ein Steuerventilsitz 114 verschließbar ist, wobei der Steuerkolben 112 und der Steuerventilsitz 114 dazu vorgesehen sind, eine Verbindung zwischen einem zur Auslasskammer 88 führenden Hochdruckkanal 116 und einem zu der Schaltzylinderkammer 98 führenden Druckzufuhrkanal 118 für den Schaltzylinder 100 zu unterbrechen oder freizugeben.

Wird die Verbindung zwischen dem Hochdruckkanal 116 und dem Druckzufuhrkanal 118 freigegeben, so steht die Schaltzylinderkammer 98 unter dem in der Auslasskammer 88 herrschenden Hochdruck und folglich bewegt sich der Schaltkolben 94 in Richtung der Ventilplatte 56 und presst den Ventilkörper 90 gegen diese, um die Einströmöffnung 92 in der Ventilplatte 56 zu verschließen (Fig. 4).

Dabei wirkt der auf den Schaltkolben 94 durch den Hochdruck in der Schaltzylinderkammer 98 wirkenden Kraft die Kraft eines elastischen Kraftspeichers 120 entgegen, welcher an dem Schaltzylindergehäuse 96 einerseits abgestützt ist und andererseits auf den Schaltkolben 94 derart wirkt, dass dieser sich von der Ventilplatte 56 weg bewegt und somit den Ventilkörper 90 in eine die Einströmöffnung 92 freigebende Stellung bewegt.

Insbesondere ist der Schaltkolben 94 mit einem Druckentlastungskanal 122 versehen, welcher von einer der Schaltzylinderkammer 98 zugewandten Öffnung zu einer, in Fig. 4 dargestellten Auslassöffnung 124 führt, die in der die Einströmöffnung 92 verschließenden Stellung des Ventilkörpers 90 und des Schaltkolbens 94 in die Einlasskammer 72 mündet. Der Druckentlastungskanal 124 bewirkt dabei, dass bei einer Unterbrechung der Verbindung zwischen dem Hochdruckkanal 116 und dem Druckzufuhrkanal 118 der Druck in der Schaltzylinderkammer 98 schnell zusammenbricht und sich somit der Schaltkolben 94 unter Wirkung des elastischen Kraftspeichers 120 mitsamt dem Ventilkörper 90 in eine die Einströmöffnung 92 freigebende, in Fig. 3 dargestellte Stellung bewegen.

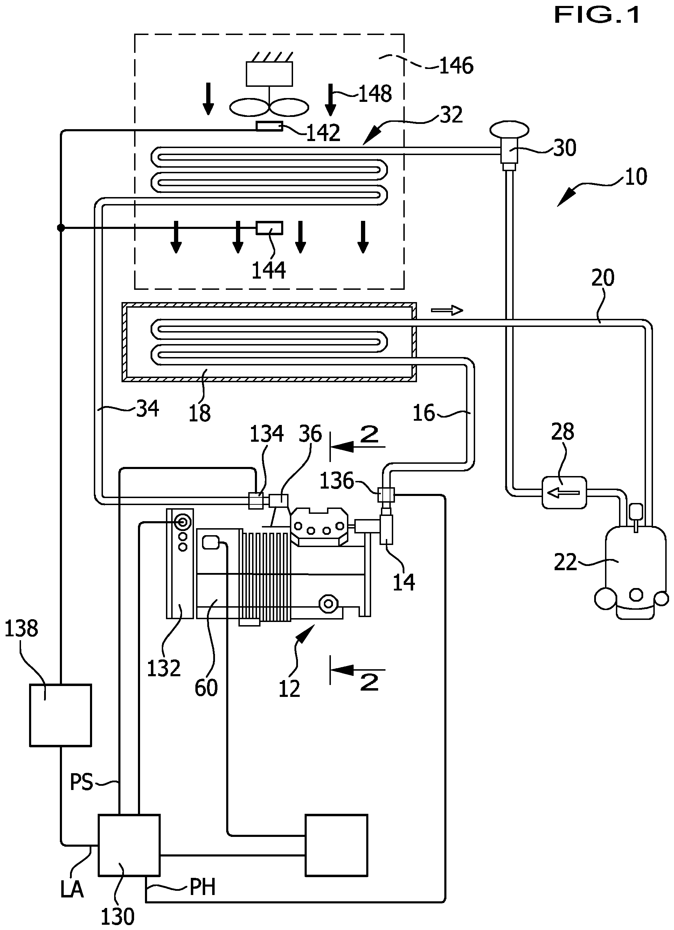

Die mechanische Leistungssteuerungseinheit 70 ist durch eine in Fig. 1 dargestellte Betriebszustandssteuerung 130 derart ansteuerbar, dass durch diese mechanische Leistungssteuerungseinheit 70 geschlossen oder geöffnet werden kann, um die jeweilige Zylinderbank 42a, 42b zu aktivieren oder zu deaktivieren und somit den Kältemittelverdichter 12 in einen den Umfang der Aktivierung und Deaktivierung der Zylinderbänke 42 definierenden Betriebsmodus B zu betreiben.

Außerdem ist durch die Betriebszustandssteuerung 130 auch der Elektromotor 60 steuerbar, insbesondere durch Ansteuerung eines Frequenzumrichters 132 des Elektromotors 60, um diesen drehzahlvariabel betreiben zu können und dadurch bei Einsatz eines geeigneten Betriebsmodus den erforderlichen Lastzustand oder Teilleistungszustand erreichen zu können.

Darüber hinaus erfasst die Betriebszustandssteuerung 130 den jeweiligen Lastzustand oder Teilleistungszustand des Kältemittelverdichters 12, beispielsweise durch Messen des Saugdrucks PS mittels eines nahe oder am Niederdruckanschluss 36 angeordneten Saugdrucksensors 134 und eines Hochdrucks PH mittels eines nahe oder am Hochdruckanschluss 14 angeordneten Hochdrucksensors 136.

Ferner lässt sich mittels des Frequenzumrichters 132 auch die vom Elektromotor 60 aufgenommene elektrische Leistung erfassen.

Außerdem wird der Betriebszustandssteuerung 130 noch ein Leistungsanforderungssignal LA übermittelt, welches von einer Anlagensteuerung 138 generiert wird, die die am niederdruckseitigen Wärmeübertrager 32 angeforderte Kälteleistung zur Kühlung eines Objekts 146, beispielsweise einer Kühlkammer, erfasst, beispielsweise durch dem niederdruckseitigen Wärmeübertrager 32 zugeordnete Temperatursensoren 142 und 144, die es erlauben, die Temperaturen eines den niederdruckseitigen Wärmeübertrager 32 und das Objekt 146 durchströmenden Mediums 148, beispielsweise vor und nach dem niederdruckseitigen Wärmeübertrager 32 zu erfassen, und mit einer geforderten Temperatur des Mediums 146 zu vergleichen.

Die Betriebszustandssteuerung 130 ist in der Lage, die Kälteleistung der Kälteanlage 10 an die für die Kühlung des Objekts 146 erforderliche Kälteleistung, vorgegeben durch das Leistungsanforderungssignal LA, einerseits durch Wahl eines geeigneten Betriebszustands B und andererseits durch Regelung der Drehzahl des Elektromotors 60 mittels des Frequenzumrichters 132 anzupassen.

Dabei steht für die Anpassung der Drehzahl allerdings nur ein durch die Bauweise des Elektromotors 60 begrenzter Drehzahlbereich zur Verfügung, der bei der Auswahl des geeigneten Betriebsmodus ebenfalls zu berücksichtigen ist.

Die in Teilleistungszuständen möglichen Betriebsmodi B können beispielsweise
- einen Betrieb des Kältemittelverdichters 12 mit allen Zylinderbänken 42 im aktivierten Zustand und nur eine Anpassung an den Teilleistungszustand durch Anpassung der Drehzahl des Elektromotors 12 durch den Frequenzumrichter 132,
- einen Betrieb des Kältemittelverdichters 12 mit aktiven und inaktiven Zylinderbänken 42 und einer Anpassung der Drehzahl des Elektromotors 12 durch den Frequenzumrichter 132 an den Umfang der aktiven und inaktiven Zylinderbänke,
- einen Betrieb des Kältemittelverdichters 12 mit nur einer aktiven Zylinderbank 42 und einer Anpassung an den Teilleistungszustand durch Anpassung der Drehzahl des Elektromotors 12 durch den Frequenzumrichter vorsehen.

Das Aktivieren oder Deaktivieren von mindestens einer der Zylinderbänke 42a, 42b, kann beispielsweise bei einer ersten Art von Betriebsmodi über den gesamten Zeitraum des jeweiligen Teilleistungszustand erfolgen, so dass zum Beispiel während eines bestimmten Zeitraums, in dem ein Teilleistungszustand von X % des Volllastzustands gefordert ist, eine Zylinderbank 42 dauerhaft deaktiviert ist und der Kältemittelverdichter 12 mit der jeweils anderen aktiven Zylinderbank 42 arbeitet, und außerdem eine entsprechende Anpassung der Drehzahl des Elektromotors durch entsprechende Ansteuerung des Frequenzumrichters 132 erfolgt.

Alternativ dazu ist es aber auch bei einer zweiten Art von Betriebsmodi möglich, während des Zeitraums eines Teilleistungszustands mindestens eine Zylinderbank 42a, 42b oder beide Zylinderbänke 42 getaktet zu aktivieren oder deaktivieren und außerdem die Drehzahl des Elektromotors 60 durch Ansteuerung des Frequenzumrichters 132 in geeigneter Weise anzupassen.

Die mechanische Leistungssteuerungseinheit 70 ist hierzu durch die in Fig. 1 dargestellte Betriebszustandssteuerung 130 derart ansteuerbar, dass durch diese in kontinuierlich aufeinanderfolgenden Schaltintervallen SI die mechanische Leistungssteuerungseinheit 70 schließt und öffnet, wobei jedes der Schaltintervalle SI ein Öffnungsintervall O aufweist, in welchem der Ventilkörper 90 in seiner freigebenden Stellung ein Hindurchtreten des Einlassstroms 74 durch die Einströmöffnung 92 zulässt und die entsprechende Zylinderbank 42 aktiviert, sowie ein Schließintervall S, in welchem der Ventilkörper 90, wie in Fig. 4 dargestellt, in seiner verschließenden Stellung das Durchströmen des Einlassstroms 74 durch die Einströmöffnung 92 blockiert und somit die entsprechende Zylinderbank 42 deaktiviert.

Innerhalb der Dauer des jeweiligen Schaltintervalls SI kann nun zur Vorgabe des jeweiligen Betriebsmodus die Zeitdauer des Öffnungsintervalls O und des Schließintervalls S relativ zueinander variabel eingestellt werden, so dass entweder das Öffnungsintervall O größer ist als das Schließintervall oder umgekehrt.

Im Extremfall kann das Öffnungsintervall O im Wesentlichen sich über die gesamte Dauer des Schaltintervalls SI erstrecken, während das Schließintervall S beliebig klein wird, oder es kann umgekehrt auch sich das Schließintervall S im Wesentlichen über die gesamte Dauer des Schaltintervalls SI erstrecken, so dass das Öffnungsintervall O beliebig klein wird.

Da in der erfindungsgemäßen Kälteanlage 10 über das Expansionsventil 30 in der Regel ständig ein Verdampfen von flüssigem Kältemittel erfolgt, führt eine Unterbrechung der Verdichtung von Kältemittel durch den Kältemittelverdichter 12 zu einem Anstieg der Temperatur T im niederdruckseitigen Wärmeübertrager 32.

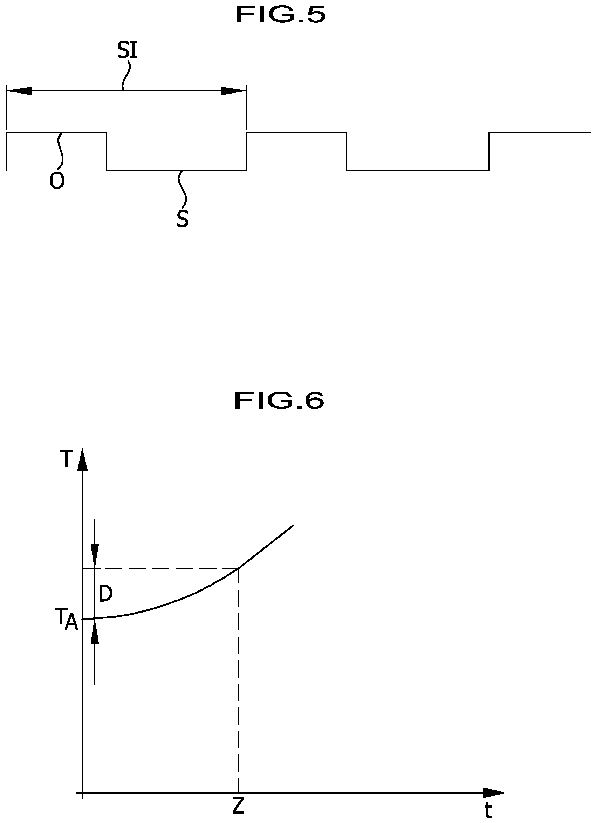

Allerdings ist das System mit einer Reaktionsträgheit versehen, so dass bei einer Unterbrechung der Absaugung von Kältemittel aus dem niederdruckseitigen Wärmeübertrager 32 die Temperatur T des niederdruckseitigen Wärmeübertragers 32 nicht sofort ansteigt, sondern, wie in Fig. 6 dargestellt, eine Zeitdauer Z benötigt, um auf einen Wert D anzusteigen.

So lange der Wert D bei Werten kleiner 10% einer Ausgangstemperatur T_{A} des niederdruckseitigen Wärmeübertragers liegt, sind diese Schwankungen für die Funktion der erfindungsgemäßen Kälteanlage irrelevant.

Aus diesem Grund ist das Schaltintervall SI so gewählt, dass dieses kürzer ist, als die Zeitdauer Z, die vergeht, bis die Temperatur T des niederdruckseitigen Wärmeübertragers 32 ausgehend von einer Temperatur T_{A}, des niederdruckseitigen Wärmeübertragers 32 um einen Wert D von ungefähr 10%, noch besser ungefähr 5%, gestiegen ist, wenn eine plötzliche Unterbrechung der Absaugung von Kältemittel aus dem niederdruckseitigen Wärmeübertrager 32 und der Zufuhr von unter Hochdruck stehendem Medium am Hochdruckanschluss 14 erfolgt.

Damit ist sichergestellt, dass die Öffnungsintervalle O und die Schließintervalle S innerhalb des jeweiligen Schaltintervalls SI sich unwesentlich auf die Funktion der Kälteanlage auswirken und lediglich zu geringfügigen Temperaturschwankungen des niederdruckseitigen Wärmeübertragers 32 der erfindungsgemäßen Kälteanlage führen.

Üblicherweise liegen die Zeitdauern der Schaltintervalle SI bei Zeitdauern, die kürzer sind als ungefähr 10 Sekunden, noch besser kürzer als ungefähr 5 Sekunden.

Andererseits sind, um ausreichende Öffnungsintervalle O zu gewährleisten, die Schaltintervalle länger als ungefähr 1 Sekunde, noch besser länger als 2 Sekunden.

Ein bevorzugter Betriebsbereich sieht Schaltintervalle SI vor, deren Dauer zwischen 2 und 10 Sekunden liegt.

Um derart kurze Schaltintervalle SI zu gewährleisten, ist vorzugsweise vorgesehen, dass die Schaltkolben 94 mitsamt den Ventilkörper 90 und den elastischen Kraftspeichern 120 insgesamt eine Eigenfrequenz aufweisen, die höher ist als die den maximalen Schaltintervallen SI entsprechende Frequenz, so dass die Schaltkolben 94 in der Lage sind, innerhalb der Schaltintervalle SI die Öffnungsintervalle O und die Schließintervalle S im Wesentlichen verzögerungsfrei zu realisieren.

Vorzugsweise liegen die Eigenfrequenzen der Systeme aus Schaltkolben 94, Ventilkörper 90 und elastischem Kraftspeicher 120 um einen Faktor von mindestens 5 oder noch besser mindestens 10 höher als die den Schaltintervallen SI entsprechenden Frequenzen.

Außerdem ist die Betriebszustandssteuerung 130 in der Lage, den Gütegrad oder COP des Kältemittelverdichters 12 in dem jeweiligen Betriebsmodus und bei dem jeweiligen Lastzustand oder Teilleistungszustand zu erkennen oder erfassen, wobei der Gütegrad oder COP insbesondere von dem eingesetzten Kältemittel, der Drehzahl des Elektromotors 60, der Zahl der aktiven Zylinderbänke 42 und dem Verhältnis von Hochdruck PH zu Saugdruck PS abhängig ist.

Der Gütegrad oder COP wird im Fall einer genauen Berechnung beispielsweise gemäß der Veröffentlichung:
Compressors and condensing units for refrigeration - Performance testing and test methods - Part 1, Refrigerant compressors
insbesondere Kapitel 4.1.5.2 und beispielsweise Gleichung 7,
von European Standard,
CEN/TC 113, Date 2014-04, prEN 13 771-1:2014, ermittelt.

Mittels der Betriebszustandssteuerung 130 besteht bei dem Kältemittelverdichter 12 somit die Möglichkeit, in einem Fall, in dem mehrere Betriebsmodi zur Realisierung eines durch das Leistungsanforderungssignal geforderten Teilleistungszustands zur Verfügung stehen, den Betrieb des Kältemittelverdichters 12 im Hinblick auf eine möglichst große Effizienz, die sich im einem möglichst hohen Gütegrad oder COP oder einer möglichst niedrigen elektrischen Leistungsaufnahme des Elektromotors 60 äußert, in den Teilleistungszuständen zu optimieren, und zwar durch Auswahl eines geeigneten Betriebsmodus des Kältemittelverdichters 12, und die Steuerung oder Regelung einer für den jeweiligen Betriebsmodus bei diesem Teilleistungszustand geeigneten Drehzahl des Elektromotors 60 durch Ansteuerung des Frequenzumrichters 132, um den Betrieb in dem vorgesehenen Teilleistungszustand durchzuführen.

Diese Berücksichtigung oder Ermittlung des Gütegrades oder COP oder der elektrischen Leistungsaufnahme für die jeweils möglichen Betriebsmodi B kann vorab erfolgen oder bei laufendem Betrieb des Kältemittelverdichters 12 durch Abfragen von vorab im Rahmen von Testläufen ermittelten und in der Betriebszustandssteuerung 130 abgespeicherten Daten erfolgen. Hierzu wird den jeweils möglichen Betriebsmodi B für diesen Teilleistungszustand oder den jeweils möglichen Betriebsmodi B einer Gruppe von möglichen Teilleistungszuständen jeweils ein Gütegrad oder COP oder eine elektrischen Leistungsaufnahme zugeordnet, so dass die Betriebszustandssteuerung 130 für den durch das Leistungsanforderungssignal LA geforderten Teilleistungszustand den Betriebsmodus B mit dem jeweils günstigsten Gütegrad oder COP oder die niedrigste elektrische Leistungsaufnahme auswählen und den Kältemittelverdichter 12 entsprechend diesem Betriebsmodus B betreiben kann.

Eine weitere Möglichkeit sieht vor, den Kältemittelverdichter 12 in den möglichen Betriebsmodi B bei dem jeweiligen Teilleistungszustand zu betreiben und die vom Elektromotor 60 aufgenommene Leistung in jedem Betriebszustand zu erfassen, so dass dann die Betriebszustandssteuerung 130 den Betriebsmodus B mit der geringsten elektrischen Leistungsaufnahme mit der größten Effizienz bewerten, abspeichern und zukünftig nur diesen Betriebsmodus B als den mit der größten Effizienz für diesen Teilleistungszustand einsetzen kann.

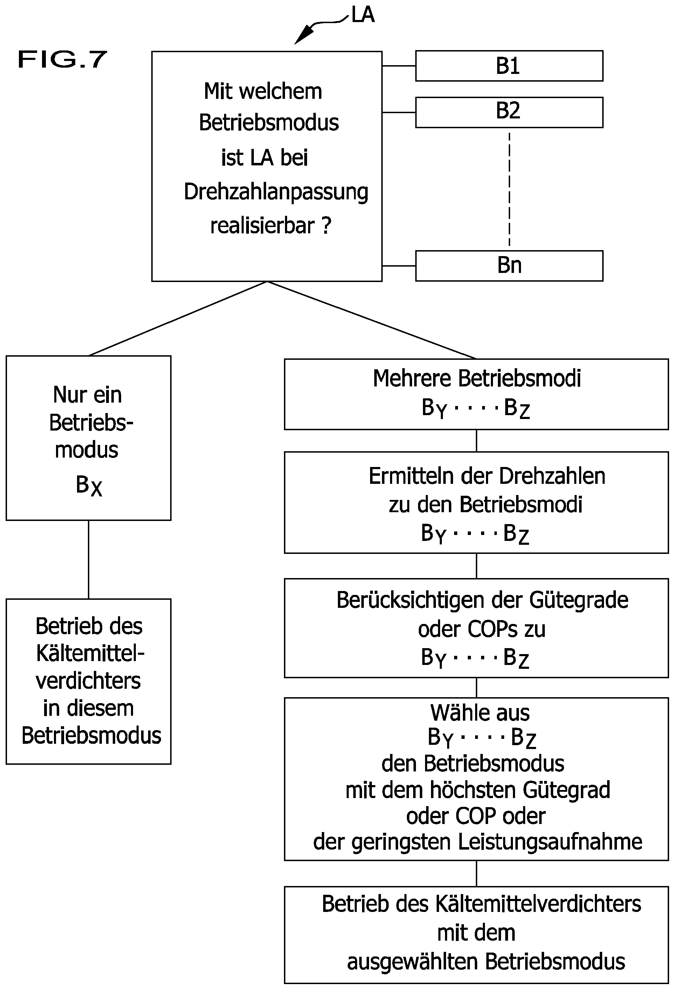

Die Vorgehensweise bei der Auswahl des möglichen Betriebsmodus B durch die Betriebszustandssteuerung 130 ist in Fig. 7 dargestellt.

Zunächst wird bei einer bei der Betriebszustandssteuerung 130 eingehenden Leistungsanforderung LA geprüft, ob zur Realisierung dieser Leistungsanforderung LA nur ein Betriebsmodus B oder mehrere Betriebsmodi B zur Verfügung stehen.

In der Regel steht bei einem Teilleistungszustand der nahe an der Maximalleistung des Kältemittelverdichters 12 liegt nur ein Betriebsmodus Bₓ zur Verfügung, nämlich der bei dem alle Zylinderbänke 42 in vollem Umfang aktiviert sind und durch Regelung der Drehzahl des Antriebsmotors 60 die Anpassung an den Teilleistungszustand erfolgt.

Bei Teilleistungszuständen die im mittleren oder niedrigen Leistungsbereich liegen stehen in der Regel mehrere Betriebsmodi B_{y} bis B_{z} zur Auswahl, je nachdem wieviel Zylinderbänke 42 vorhanden sind und ob der Kältemittelverdichter 12 mit der ersten Art von Betriebsmodi und/oder der zweiten Art von Betriebsmodi betrieben werden kann.

Zu diesen Betriebsmodi erfolgt dann jeweils die Ermittlung der für die Realisierung des geforderten Teilleistungszustands erforderlichen Drehzahl der Elektromotors 60, und basierend hierauf dann eine Berücksichtigung oder eine Ermittlung des Gütegrades oder des COP oder der elektrischen Leistungsaufnahme in der vorstehend beschriebenen Art und Weise.

Mit dem dem jeweiligen Betriebsmodus B_{y} bis B_{z} zugeordneten Gütegrad oder COP oder der elektrischen Leistungsaufnahme ist die Auswahl des Betriebsmodus mit dem besten Gütegrad oder COP oder der niedrigsten elektrischen Leistungsaufnahme möglich, der dann von der Betriebszustandssteuerung 130 zum Betrieb des Kältemittelverdichters 12 eingesetzt wird, um den durch das Leistungsanforderungssignal LA geforderten Teilzustand zu realisieren.

Die vorstehend erläuterte allgemeine Vorgehensweise lässt sich nachfolgend am Beispiel des eingangs beschriebenen Ausführungsbeispiels des Kältemittelverdichters 12 im Einzelnen anhand einer vereinfachten Vorgehensweise zur Bestimmung des Gütegrades oder COP oder der elektrischen Leistungsaufnahme erläutern.

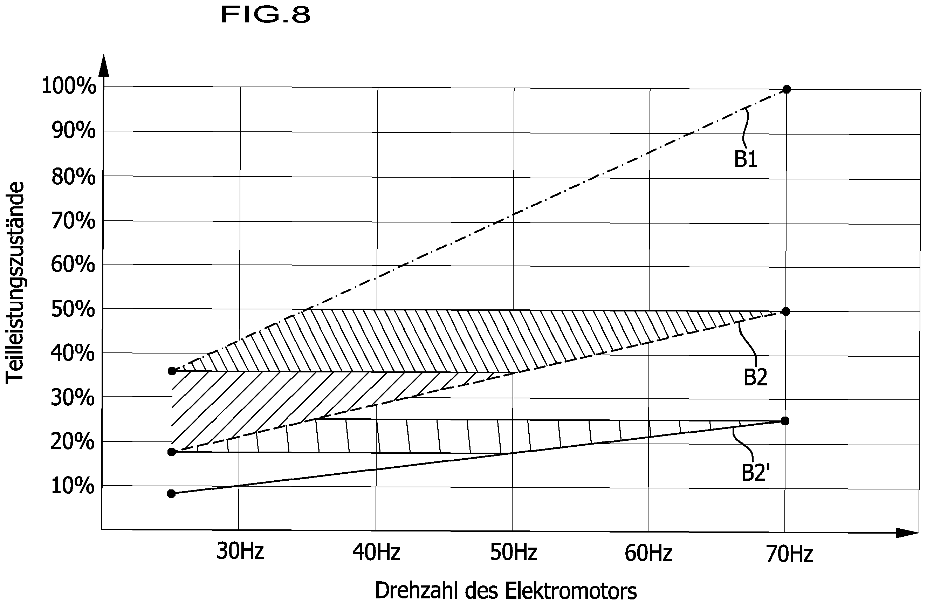

Bei dem Kältemittelverdichter, der gemäß dem ersten Ausführungsbeispiel zwei Zylinderbänke 42a und 42b aufweist, gibt es im Teilleistungszustand bei einer Beschränkung auf die erste Art von Betriebsmodi nur die Möglichkeit, diesen in einem ersten Betriebsmodus B1 zu betreiben, in dem beide Zylinderbänke 42a und 42b aktiv sind, oder in einem zweiten Betriebsmodus B2 zu betreiben, in dem nur eine der Zylinderbänke 42a, 42b aktiv und die andere inaktiv ist, wie in Fig. 8 dargestellt.

In jedem der Betriebsmodi B1, B2 besteht die Möglichkeit die Drehzahl des Elektromotors 60 mittels des Frequenzumrichters 132, beispielsweise zwischen 25 Hz und 70 Hz, zu variieren.

Da bei Teilleistungszuständen über 50 % alle Zylinderbänke 42a, 42b aktiv sein müssen, sind diese nur im Betriebsmodus B1 realisierbar, und Teilleistungszuständen unter 35 % sind nur durch Deaktivieren einer der Zylinderbänke 42a, 42b und somit nur im Betriebsmodus B2 realisierbar, so dass lediglich bei Teilleistungszuständen zwischen 35 % und 50 % eine Optimierung durch Berücksichtigung des Gütegrades oder COP möglich ist, da der Kältemittelverdichter 12 bei den Teilleistungszuständen zwischen 35 % und 50 % entweder im ersten Betriebsmodus B1 oder im zweiten Betriebsmodus B2 betrieben werden kann.

Die Auswahl zwischen dem ersten Betriebsmodus B1 und dem zweiten Betriebsmodus B2 ist daher durch Ermittlung des Gütegrades oder COP dieser Betriebsmodi möglich.

Um beispielsweise eine vereinfachte Berücksichtigung des Gütegrades oder COP oder der elektrischen Leistungsaufnahme durchführen zu können, werden die möglichen Teilleistungszuständen zwischen 35 % und 70 % in zwei Gruppen unterteilt und zwar beispielsweise im einfachsten Fall in Abhängigkeit von dem durch den Hochdrucksensor 136 erfassten Hochdruck PH.

Liegt bei einem bestimmten Kältemittel beispielsweise der Hochdruck PH über einem Hochdruckgrenzwert PHG, so wird der Betriebsmodus B2 gewählt, liegt der Hochdruck PH unter dem Grenzwert PHG, so wird der Betriebsmodus B1 gewählt.

Bei den Betriebsmodi B1 und B2 gemäß der ersten Art wird jeweils konstant die entsprechende Zylinderbank aktiviert oder deaktiviert und dies während der gesamten Zeit, während welcher ein Teilleistungszustand realisiert wird.

Das erste Ausführungsbeispiel des erfindungsgemäßen Kältemittelverdichters bietet aber aufgrund der Tatsache, dass Betriebsmodi der zweiten Art ebenfalls realisiert werden können, bei welchen während aufeinanderfolgender Schaltintervalle SI zeitanteilig eine Aktivierung oder Deaktivierung der jeweiligen Zylinderbank 42 erfolgen kann, die Möglichkeit, beispielsweise bei Auswahl nur einer der Zylinderbänke 42 und durch Taktung der Aktivierung und Deaktivierung dieser einen Zylinderbank 42 innerhalb der Schaltintervalle SI, beispielsweise im Verhältnis 1:1, sowie Deaktivierung der anderen Zylinderbank 42 den Betriebsmodus B2' auszuwählen, bei welchem noch niedrigere Teilleistungszustände möglich sind, wobei dann beispielsweise in einem Teilleistungsbereich zwischen 17 % und 25 % die Möglichkeit besteht, den Betrieb des Kältemittelverdichters 12 ebenfalls hinsichtlich des Gütegrades oder COP durch eine Auswahl zwischen dem Betriebszustand B2 oder dem Betriebszustand B2' zu optimieren, wobei beispielsweise ebenfalls bei einem Hochdruck PH, der über dem Hochdruckgrenzwert PHG liegt, der Betriebsmodus B2' gewählt wird, während bei einem Hochdruck PH, der unter dem Grenzwert PHG liegt der Betriebsmodus B2 gewählt wird.

Diese Verhältnisse können sich aber auch je nach verwendetem Kältemittel aber auch umkehren.

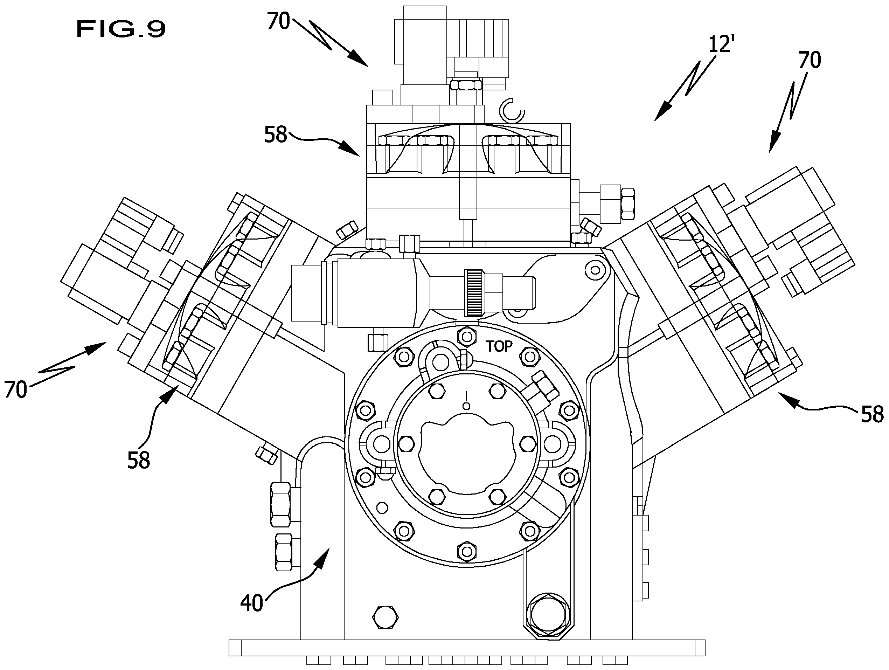

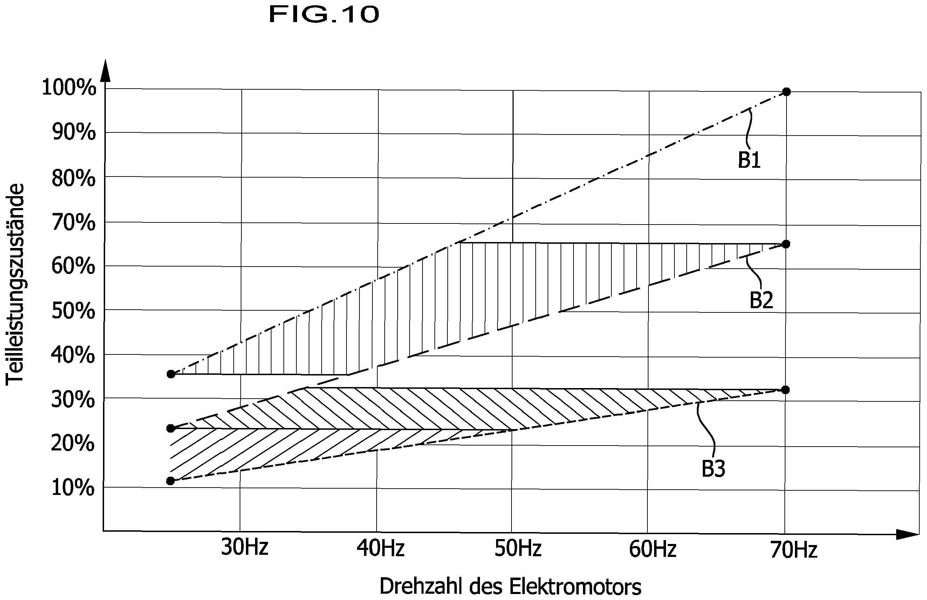

Wird gemäß einem zweiten Ausführungsbeispiel ein Kältemittelverdichter 12' mit drei Zylinderbänken 42a, 42b und 42c eingesetzt (Fig. 9), beispielsweise mit jeweils zwei Zylindern pro Zylinderbank 42, wobei jede der Zylinderbänke 42a, 42b, und 42c mittels eines zugeordneten mechanischen Leistungssteuerungseinheit 70 einzeln aktivierbar oder deaktivierbar ist, so sind - wie in Fig. 10 dargestellt - drei Betriebsmodi B1, B2, B3 möglich, nämlich der erste Betriebsmodus B1 mit allen Zylinderbänken 42a, 42b und 42c im aktivierten Zustand, ein zweiter Betriebsmodus B2 mit zwei der Zylinderbänke 42 im aktivierten Zustand und ein dritter Betriebsmodus mit nur einer der Zylinderbänke 42 im aktivierten Zustand.

Hinsichtlich des Aufbaus im Einzelnen entspricht das zweite Ausführungsbeispiel dem ersten Ausführungsbeispiel.

Bei diesen Ausführungsbeispiel besteht bei einem Teilleistungszustand im Bereich zwischen 35 % und 65 % die Auswahlmöglichkeit zwischen den Betriebsmodi B1 und B2 und im Bereich zwischen 23 % und 33 % die Auswahlmöglichkeit zwischen den Betriebsmodi B2 und B3.

Auch bei diesem zweiten Ausführungsbeispiel werden aus Gründen der Vereinfachung der Vorgehensweise bei der Ermittlung des Gütegrades die Teilleistungszustände durch Festlegung von einem Hochdruckgrenzwert PHG in zwei Gruppen eingeteilt, wobei bei einem Hochdruck PH der über dem Hochdruckgrenzwert PHG liegt, bei der Auswahl zwischen den Betriebsmodi B1 und B2 der Betriebsmodus B2 und bei Auswahl zwischen den Betriebsmodi B2 und B3 der Betriebsmodus B3 ausgewählt wird, während bei einem Hochdruck PH unter dem Hochdruckgrenzwert PHG bei der Auswahl zwischen den Betriebsmodi B1 und B2 der Betriebsmodus B1 und bei der Auswahl zwischen dem Betriebsmodi B2 und B3 der Betriebsmodus B2 ausgewählt wird.

Im Übrigen sind in gleicher Weise wie beim ersten Ausführungsbeispiel die maximalen Teilleistungszustände mit dem Betriebsmodus B1 und die minimalen Teilleistungszustände mit dem Betriebsmodus B3 und der jeweiligen Anpassung der Drehzahl des Elektromotors 60 realisierbar.

Ein drittes Ausführungsbeispiel eines Kältemittelverdichters 12", der insbesondere für das CO₂ als Kältemittel geeignet ist, umfasst einen Hochdruckanschluss 14" und einen Niederdruckanschluss 36".

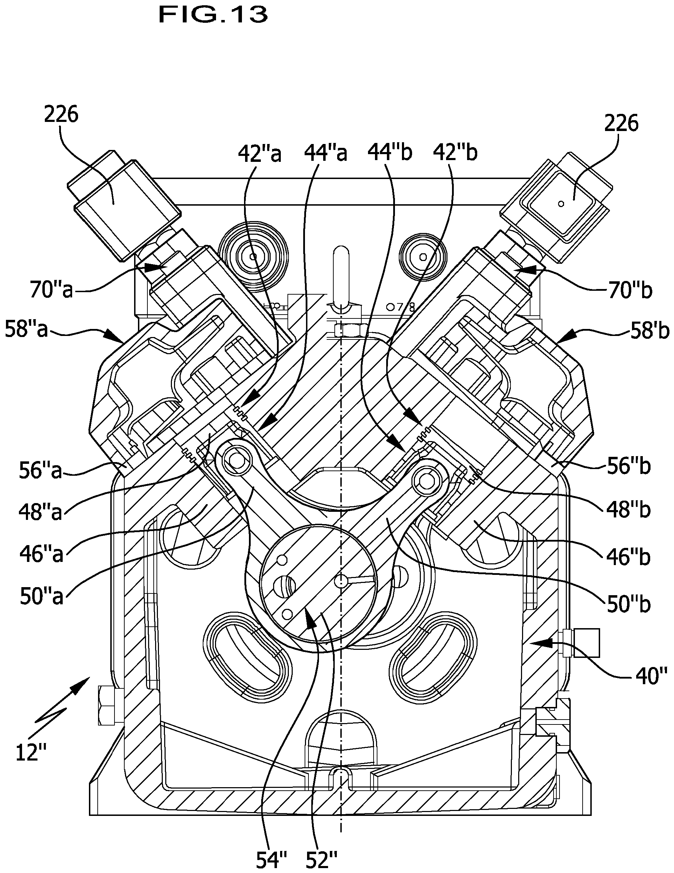

Wie in Fig. 13 dargestellt, ist der Kältemittelverdichter 12" als Hubkolbenverdichter ausgebildet und umfasst ein Verdichtergehäuse 40", in welchem beispielsweise zwei V-fömig zueinander angeordnete, parallel arbeitende Zylinderbänke 42"a und 42"b vorgesehen sind, von denen jede mindestens eine, insbesondere zwei oder mehr Zylindereinheiten 44" umfasst.

Jede dieser Zylindereinheiten 44" ist gebildet aus einem Zylindergehäuse 46", in welchem jeweils ein Kolben 48" dadurch oszillierend bewegbar ist, dass der Kolben 48" durch jeweils ein Pleuel 50" antreibbar ist, das seinerseits auf einem Exzenter 52" einer Exzenterwelle 54" sitzt, die beispielsweise durch einen Elektromotor 60" angetrieben ist, der als ein Synchron- oder Asynchronmotor ausgebildet sein kann.

Das Zylindergehäuse 46" jeder der Zylindereinheiten 44" wird durch eine Ventilplatte 56" abgeschlossen, auf welcher ein Zylinderkopf 58" angeordnet ist.

Vorzugsweise überdeckt dabei die Ventilplatte 56" nicht nur ein Zylindergehäuse 46" einer Zylinderbank 42", sondern sämtliche Zylindergehäuse 46" der jeweiligen Zylinderbank 42" und in gleicher Weise übergreift der Zylinderkopf 58" ebenfalls sämtliche Zylindergehäuse 46" der jeweiligen Zylinderbank 42".

Das Verdichtergehäuse 40" umfasst ferner noch einen mit dem Niederdruckanschluss 36" in Verbindung stehenden Einlasskanal 62", welcher beispielsweise in dem Verdichtergehäuse 40" integriert ist.

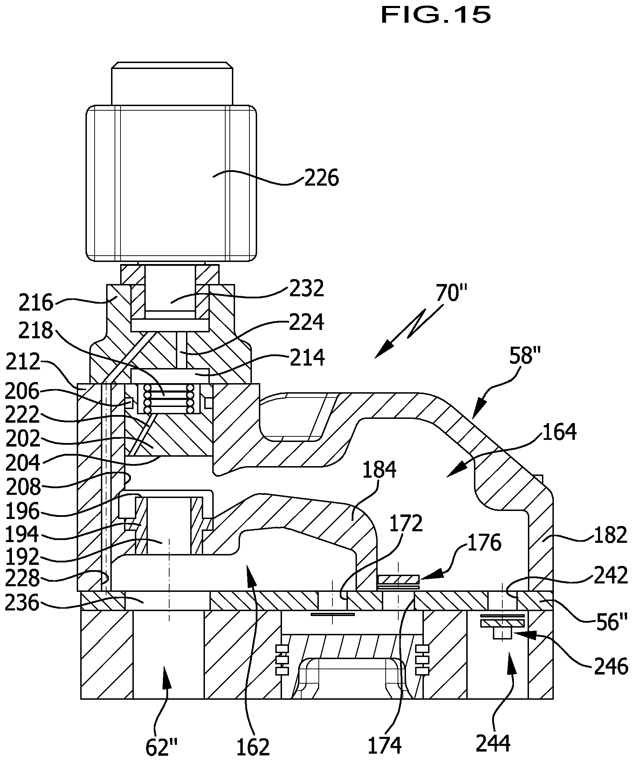

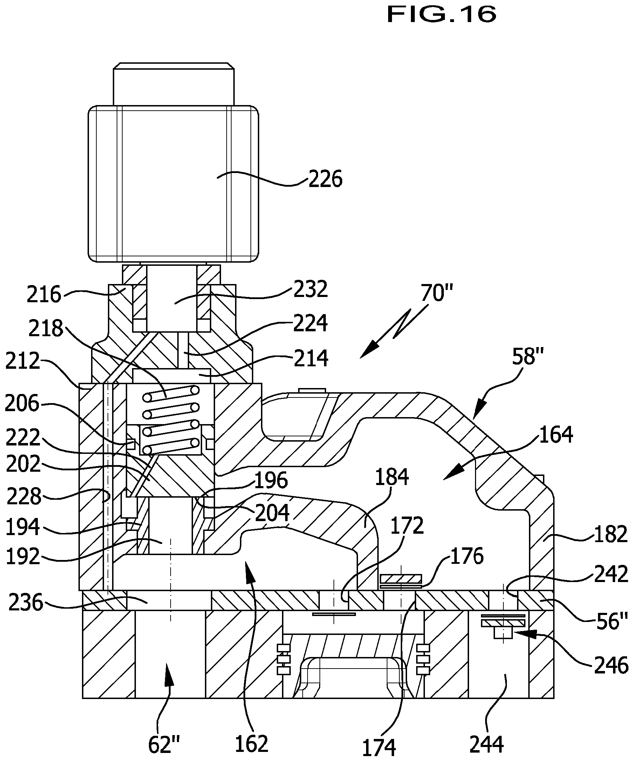

In jedem der Zylinderköpfe 42"a und 42"b ist, wie in den Fig. 15 und 16 dargestellt, jeweils eine Einlasskammer 162 und eine Auslasskammer 164 angeordnet, die den beiden Zylindereinheiten 44" der jeweiligen Zylinderbank 42" zugeordnet sind.

Insbesondere liegt die Einlasskammer 162 über Einlassöffnungen 172 der Zylindereinheiten 44" der Zylinderbank 42".

Ferner liegt die Auslasskammer 164 über in der Ventilplatte 56" angeordneten Auslassöffnungen 174 der Zylindereinheiten 44", die mit auf der Ventilplatte 56" sitzenden Auslassventilen 176 versehen sind, und grenzt insbesondere unmittelbar an diese an.

Wie in Fig. 15 und 16 dargestellt, umfasst jeder Zylinderkopf 42" einen Außenkörper 182, welcher die jeweilige Ventilplatte 56" übergreift und die Einlasskammer 162 und die Auslasskammer 164 umschließt, die ihrerseits wiederum durch einen innerhalb des Außenkörpers 182 verlaufenden Trennkörper 184 voneinander getrennt sind, wobei der Trennkörper 184 sich ausgehend von der jeweiligen Ventilplatte 56" erhebt und sich über die Einlasskammer 162 und diese übergreifend erstreckt.

Somit liegt die Auslasskammer 164 im Bereich der Ventilplatte 56" seitlich neben der Einlasskammer 162 und erstreckt sich jedoch zwischen dem Außenkörper 182 und dem Trennkörper 184 zumindest bereichsweise über der Einlasskammer 162.

Zur Betriebszustandssteuerung der Leistung, das heißt zur Betriebszustandssteuerung der Verdichter-Förderleistung, des Kältemittelverdichters 12" ist jedem Zylinderkopf 58" die durch die Betriebszustandssteuerung 130 aktiv angesteuerte mechanische Leistungssteuereinheit 70" zugeordnet, mit welcher ein Verbindungskanal 192 zwischen der Auslasskammer 164 und der Einlasskammer 162 verschlossen oder geöffnet werden kann, wobei die dem Zylinderkopf 58" zugeordneten Zylindereinheiten 44" bei verschlossenem Verbindungskanal 192 (Fig. 16) mit voller Leistung Kältemittel verdichten und bei geöffnetem Verbindungskanal 192 kein Kältemittel verdichten, da das Kältemittel von der Auslasskammer 164 in die Einlasskammer 162 zurückströmt.

Der Verbindungskanal 192 verläuft dabei durch ein in den Trennkörper 184 eingesetztes Einsatzteil 194, welches einen Dichtungssitz 196 bildet, der der Auslasskammer 164 zugewandt liegt und welches an einen den Dichtungssitz 196 umgebenden und an diesen anschließenden Teil der Auslasskammer 164 angrenzt.

Ferner ist der Dichtungssitz 196 einem Verschlusskolben 202 zugewandt, welcher beispielsweise mit einem metallisch ausgebildeten Dichtungsbereich 204 auf den Dichtungssitz 196 aufsetzbar ist, um den Verbindungskanal 192 dicht abschließend zu verschließen und welcher so weit von dem Dichtungssitz 196 abhebbar ist, dass der Dichtungsbereich 204 im Abstand von dem Dichtungssitz 196 steht und somit Kältemittel von der Auslasskammer 162 in die Einlasskammer 164 überströmen kann.

Vorzugsweise ist dabei der Verschlusskolben 202 koaxial zu dem Einsatzteil 194 mit dem Dichtungssitz 196 und mittels eines Kolbenrings 206 abgedichtet in einer Führungsbohrung 208 geführt, die durch einen an den Außenkörper 182 angeformten Führungshülsenkörper 212 des Zylinderkopfes 58" gebildet ist.

Vorzugsweise ist der Verschlusskolben 202 selbst oder zumindest der Dichtungsbereich 204 aus einem Metall, beispielsweise aus einem Buntmetall, hergestellt, das eine geringere Härte als das Metall des Dichtungssitzes 196 aufweist, der beispielsweise aus Stahl, insbesondere gehärtetem Stahl, hergestellt ist.

Um eine schnelle Bewegung des Verschlusskolbens 202 zu ermöglichen, liegt insbesondere ein Hub des Verschlusskolbens 202 zwischen einer Verschlussstellung und einer Offenstellung im Bereich zwischen einem Viertel und der Hälfte eines mittleren Durchmessers des Verbindungskanals 192.

Der Verschlusskolben 202 begrenzt dabei eine Druckkammer 214, die auf einer dem Dichtungsbereich 204 abgewandten Seite des Verschlusskolbens 202 angeordnet ist und auf einer dem Verschlusskolben 202 gegenüberliegenden Seite durch einen Abschlusskörper 216 verschlossen ist.

Das Volumen der Druckkammer 214 ist insbesondere so gering, dass es in der Offenstellung des Verschlusskolbens kleiner ist als ein Drittel, besser kleiner als ein Viertel, noch besser kleiner als ein Fünftel, vorteilhaft kleiner als ein Sechstel und noch vorteilhafter kleiner als ein Achtel des maximalen Volumens der Druckkammer 214 in der Verschlussstellung des Verschlusskolbens 202.

Ferner ist in der Druckkammer 214 noch eine Druckfeder 218 angeordnet, welche sich einerseits am Abschlusskörper 216 abstützt und andererseits den Verschlusskolben 202 in Richtung seiner auf dem Dichtungssitz 196 aufsitzenden Verschlussstellung beaufschlagt.

Je nach Druckbeaufschlagung der Druckkammer 214 ist der Verschlusskolben 202 in seine in Fig. 15 dargestellte Offenstellung oder in seine in Fig. 16 dargestellte Verschlussstellung bewegbar.

Hierzu ist der Verschlusskolben 202 von einem Drosselkanal 222 durchsetzt, der sich von der Druckkammer 214 durch den Verschlusskolben 202 bis zu einer Mündungsöffnung erstreckt, die radial außerhalb des Dichtungsbereichs auf einer dem Dichtungssitz 196 zugewandten Seite angeordnet ist, jedoch dadurch, dass diese radial außerhalb des Dichtungsbereichs 204 liegt, in der Verschlussstellung des Verschlusskolbens 202 einen Eintritt von unter Druck in der Auslasskammer 164 stehendem und den Dichtungssitz 196 umströmenden Kältemittel erlaubt und dieses gedrosselt der Druckkammer 214 zuführt.

Darüber hinaus führt in die Druckkammer 214, und zwar beispielsweise durch den Abschlusskörper 216 ein Entlastungskanal 224, der durch ein als Ganzes mit 226 bezeichnetes Magnetventil mit einem Druckentlastungskanal 228 verbindbar ist, welcher mit der Einlasskammer 162 in Verbindung steht.

Beispielsweise ist das Magnetventil 226 so ausgebildet, dass dieses einen Ventilkörper 232 aufweist, mit welchem die Verbindung zwischen dem Druckentlastungskanal 228 und dem Entlastungskanal 224 unterbrochen oder hergestellt werden kann.

Ist die Verbindung zwischen dem Entlastungskanal 224 und dem Druckentlastungskanal 228 hergestellt, so überwiegt in der Druckkammer 214 der Saugdruck, während der Verschlusskolben 202 auf seiner der Auslasskammer 164 zugewandten Seite von dem Druck in der Auslasskammer 164 beaufschlagt ist und somit in seine Offenstellung bewegt wird.

Ist jedoch die Verbindung zwischen dem Druckentlastungskanal 228 und dem Entlastungskanal 224 durch den Ventilkörper 232 unterbrochen, so drückt die Druckfeder 218 den Verschlusskolben 202 auf den Dichtungssitz 196 und zusätzlich strömt durch den Drosselkanal 222 Hochdruck in die Druckkammer 214, so dass sich in der Druckkammer 214 Hochdruck aufbaut, der zusätzlich zur Wirkung der Druckfeder 218 den Verschlusskolben 202 mit dem Dichtungselement 204 auf den Dichtungssitz 196 drückt.

Insbesondere ist der Verschlusskolben 202 so ausgebildet, dass dieser sich radial über den Dichtungssitz 196 hinaus erstreckt, so dass selbst bei in Verschlussstellung stehendem Verschlusskolben 202 die radial außerhalb des Dichtungssitzes 196 liegende und durch Hochdruck beaufschlagte Kolbenfläche dazu führt, dass der Verschlusskolben 202 entgegen der Kraft der Druckfeder 218 in die Offenstellung, dargestellt in Fig. 15 bewegt wird, sofern der Ventilkörper 232 des Magnetventils 226 die Verbindung zwischen dem Entlastungskanal 224 und dem Druckentlastungskanal 228 herstellt was dazu führt, dass sich in der Druckkammer 214 ein Saugdruck einstellt.

Die Zufuhr von unter Saugdruck stehendem Kältemittel erfolgt über einen in den Verdichtergehäuse 40" eingeformten Zufuhrkanal 62", welcher zu einer zur Ventilplatte 56" führenden Einlassöffnung führt, durch welche unter Saugdruck stehendes Kältemittel zu einer Durchtrittsöffnung 236 in der Ventilplatte 56" strömt und durch diese in die Einlasskammer 162 übertritt.

Außerdem führt, wie in Fig. 15 und 16 dargestellt die Auslasskammer 164 zu einer in der Ventilplatte 56" angeordneten Auslassöffnung 242 durch welche das unter Druck in der Auslasskammer 164 stehende Kältemittel in einen in dem Verdichtergehäuse vorgesehenen Auslasskanal 244 übertritt und zu dem Hochdruckanschluss 16" strömen kann.

Insbesondere ist der Auslassöffnung 244 der Ventilplatte 56" ein Rückschlagventil 246 zugeordnet, welches an der Ventilplatte 56" gehalten ist und dafür sorgt, dass im Fall der Offenstellung des Verschlusskolbens 202 und somit im Fall eines Überströmens des Kältemittels aus der Auslasskammer 164 in die Einlasskammer 162 der Druck in dem Auslasskanal 244 nicht abfällt, sondern durch das sich schließende Rückschlagventil 246 aufrecht erhalten wird.

Das dritte Ausführungsbeispiel des Kältemittelverdichters 12" ist in gleicher Weise betreibbar wie das erste Ausführungsbeispiel, so dass hinsichtlich des Betriebs desselben in den Betriebsmodi B1, B2 und B2' auf die Ausführungen zum ersten Ausführungsbeispiel vollinhaltlich Bezug genommen werden kann.

## Patentansprüche

1. Kältemittelverdichter (12) für Kälteanlagen (10) umfassend einen Elektromotor (60), mindestens zwei Zylinderbänke (42), von denen jede mindestens eine Zylindereinheit (44) mit jeweils mindestens einem Zylindergehäuse (46) und mindestens einem von dem Elektromotor (60) angetriebenen und oszillierend bewegbaren Kolben (48) aufweist, sowie einen jeder Zylinderbank (42) zugeordneten Zylinderkopf (58) mit einer von einem Einlassstrom (74) durchströmten Einlasskammer (72, 162) und einer von einem Auslassstrom (86) durchströmten Auslasskammer (88, 164) und eine mechanische Leistungssteuereinheit (70) zum Aktivieren und Deaktivieren mindestens einer der Zylinderbänke (42), um deren Kältemittelausstoß zu aktivieren oder deaktivieren, wobei der Kältemittelverdichter (12) zum Betrieb in Teilleistungszuständen in mindestens zwei verschiedenen Betriebsmodi, von denen jeder eine von den anderen Betriebsmodi (B) unterschiedliche Aktivierung oder Deaktivierung der Zylinderbänke (42) vorsieht, betreibbar ist,
**dadurch gekennzeichnet, dass** dem Kältemittelverdichter (12) ein Frequenzumrichter (132) zur Drehzahlsteuerung des Elektromotors (60) zugeordnet ist, dass dem Kältemittelverdichter (12) eine Betriebszustandssteuerung (130) zugeordnet ist, welche entsprechend einem dieser zugeführten Leistungsanforderungssignal (LA) für den Betrieb des Kältemittelverdichters (12) in dem diesem Leistungsanforderungssignal (LA) entsprechenden Teilleistungszustand den Kältemittelverdichter (12) in einem aus mindestens zwei verschiedenen Betriebsmodi (B) ausgewählten Betriebsmodus (B) sowie einer an den ausgewählten Betriebsmodus (B) angepassten Drehzahl des Elektromotors (60) zur Realisierung dieses Teilleistungszustandes betreibt.

2. Kältemittelverdichter nach Anspruch 1, **dadurch gekennzeichnet, dass** die Betriebszustandssteuerung (130) den Kältemittelverdichter (12) in einem ersten Betriebsmodus (B1) mit Aktivierung aller Zylinderbänke (42) und mit einer Anpassung der Drehzahl des Elektromotors (60) an den ersten Betriebsmodus (B1) betreibt und/oder dass die Betriebszustandssteuerung den Kältemittelverdichter (12) in mindestens einem weiteren Betriebsmodus (B) bei Deaktivierung mindestens einer der Zylinderbänke (42) und Aktivierung mindestens einer der Zylinderbänke (42) sowie mit einer Anpassung der Drehzahl des Elektromotors (60) an diesen Betriebsmodus (B) betreibt.

3. Kältemittelverdichter nach einem der voranstehenden Ansprüche, **dadurch gekennzeichnet, dass** die Betriebszustandssteuerung (130) bei Teilleistungszuständen, die durch mehrere der Betriebsmodi (B) realisierbar sind, den Betriebsmodus (B) auswählt, der zu dem größten Gütegrad oder zu dem höchsten COP oder zu der niedrigsten elektrischen Leistungsaufnahme des Elektromotors (60) in diesem Teilleistungszustand führt.

4. Kältemittelverdichter nach Anspruch 3, **dadurch gekennzeichnet, dass** die Betriebszustandssteuerung (130) für die jeweils zur Realisierung eines Teilleistungszustands möglichen Betriebsmodi (B) den Gütegrad oder den COP oder die elektrische Leistungsaufnahme des Elektromotors (60) ermittelt, und durch Vergleich der ermittelten Gütegrade oder COP's oder der elektrischen Leistungsaufnahme den Betriebsmodus (B) auswählt.

5. Kältemittelverdichter nach Anspruch 3 oder 4, **dadurch gekennzeichnet, dass** die Betriebszustandssteuerung (130) für die Ermittlung des Gütegrads oder des COP oder der elektrischen Leistungsaufnahme für jeden Betriebsmodus (B) Daten abgespeichert hat.

6. Kältemittelverdichter nach einem der Ansprüche 3 bis 5, **dadurch gekennzeichnet, dass** die Ermittlung des Gütegrades oder COP oder der elektrischen Leistungsaufnahme durch die Betriebszustandssteuerung (130) durch Erfassung des Saugdrucks (PS) und/oder der Hochdrucks (PH) am Kältemittelverdicher (12) erfolgt.

7. Kältemittelverdichter nach einem der Ansprüche 3 bis 6, **dadurch gekennzeichnet, dass** die Betriebszustandssteuerung (130) zur Ermittlung des Gütegrades oder des COP oder der elektrischen Leistungsaufnahme das Kältemittel, den Teilleistungszustand, die Leistungsaufnahme und/oder die Drehzahl des Elektromotors (60) heranzieht.

8. Kältemittelverdichter nach einem der voranstehenden Ansprüche, **dadurch gekennzeichnet, dass** zur Ermittlung des Gütegrads oder COP der Betriebsmodi die zu realisierenden Teilleistungszustände in oberhalb eines Grenzwerts (PHG) und unterhalb eines Grenzwerts (PHG) liegende Teilleistungszustände unterteilt werden und dass bei oberhalb des Grenzwerts (PHG) liegenden Teilleistungszuständen bei den Betriebsmodi (B), die eine höhere Drehzahl des Elektromotors (60) erfordern, ein höherer Gütegrad oder COP oder eine niedrigere elektrischen Leistungsaufnahme angenommen wird und somit diese ausgewählt werden, und bei unterhalb des Grenzwerts (PHG) liegenden Teilleistungszustände bei den Betriebsmodi (B), die eine niedrigere Drehzahl des Elektromotors (60) erfordern, ein höherer Gütegrad oder COP oder eine niedrige elektrische Leistungsaufnahme angenommen wird und somit diese ausgewählt werden.

9. Kältemittelverdichter nach einem der voranstehenden Ansprüche, **dadurch gekennzeichnet, dass** die Betriebszustandssteuerung (130) bei einer ersten Art von Betriebsmodi den jeweiligen Betriebsmodus (B) mit fest vorgegebener Deaktivierung und Aktivierung der Zylinderbänke (42) zum Erreichen des durch das Leistungsanforderungssignal (LA) geforderten Teilleistungszustands permanent beibehält.

10. Kältemittelverdichter nach einem der voranstehenden Ansprüche, **dadurch gekennzeichnet, dass** die Betriebszustandssteuerung (130) den Kältemittelverdichter (12) in mindestens einem einer zweiten Art von Betriebsmodi entsprechenden Betriebsmodus (B) durch getaktete Deatkivierung und Aktivierung mindestens eine der Zylinderbänke (42) in definierten Schaltintervallen (SI) betreibt, wobei in diesem Betriebsmodus (B) insbesondere die zeitanteilige Deaktivierung und Aktivierung mindestens einer der Zylinderbänke (42) in den Schaltintervallen (SI) bei der Realisierung des jeweiligen Teilleistungszustandes konstant ist.

11. Kältemittelverdichter nach einem der voranstehenden Ansprüche, **dadurch gekennzeichnet, dass** die Aktivierung und Deaktivierung jeder Zylinderbank (42) mittels einer von der Betriebszustandssteuerung (130) gesteuerten mechanischen Leistungssteuereinheit (70) erfolgt, insbesondere dass die mechanische Leistungssteuereinheit (70) einem Zylinderkopf (58) der Zylinderbank (42) zugeordnet ist, insbesondere dass die mechanische Leistungssteuereinheit (70) zum Aktivieren oder Deaktivieren der jeweiligen Zylinderbank (42) einen Einlassstrom (74) in die Einlasskammer (72) des Zylinderkopfes (58) steuert.

12. Kältemittelverdichter nach einem der voranstehenden Ansprüche, **dadurch gekennzeichnet, dass** die Leistungssteuereinheit (70) zum Aktivieren oder Deaktivieren der jeweiligen Zylinderbank (42') in dem Zylinderkopf (58) die Auslasskammer (164) mit der Einlasskammer (162) verbindet.

13. Kältemittelverdichter nach einem der voranstehenden Ansprüche, **dadurch gekennzeichnet, dass** die Betriebszustandssteuerung (130) eine von Frequenzumrichter (132) separate Betriebszustandssteuerung ist.

14. Kältemittelverdichter nach einem der voranstehenden Ansprüche, **dadurch gekennzeichnet, dass** die Betriebszustandssteuerung (130) in einem den Frequenzumrichter (132) aufnehmendem Gehäuse (40) angeordnet ist.

15. Kältemittelverdichter nach einem der voranstehenden Ansprüche, **dadurch gekennzeichnet, dass** die Zylinderbänke (42) des Kältemittelverdichters (12) im Parallelbetrieb arbeiten.

16. Kältemittelverdichter nach einem der voranstehenden Ansprüche, **dadurch gekennzeichnet, dass** der Kältemittelverdichter (12) pro Zylinderbank (42) mindestens zwei Zylindereinheiten (44) aufweist, dass insbesondere der Kältemittelverdichter (12) mehr als zwei Zylinderbänke (42) aufweist.

17. Kälteanlage umfassend einen Kältemittelverdichter (12), einen hochdruckseitigen Wärmeübertrager (18), ein Expansionsorgan (30) und einen niederdruckseitigen Wärmeübertrager (32), **dadurch gekennzeichnet, dass** der Kältemittelverdichter (12) nach einem der voranstehenden Ansprüche ausgebildet ist, dass insbesondere die Kälteanlage (10) eine Anlagensteuerung (138) aufweist, welche das Leistungsanforderungssignal (LA) erzeugt, dass insbesondere die Betriebszustandssteuerung (130) in einem Gehäuse der Anlagensteuerung (138) angeordnet ist.

## Claims

1. A refrigerant compressor (12) for refrigeration systems (10), comprising an electric motor (60), at least two cylinder banks (42), each of which has at least one cylinder unit (44) having in each cylinder bank at least one cylinder housing (46) and at least one reciprocating-movement piston (48) driven by the electric motor (60), and a cylinder head (58) that is associated with each cylinder bank (42) and has an inlet chamber (72, 162), through which an inlet stream (74) flows, and an outlet chamber (88, 164), through which an outlet stream (86) flows, and a mechanical performance control unit (70) for activating and deactivating at least one of the cylinder banks (42) in order to activate or deactivate its refrigerant output, wherein for the purpose of operation in partial performance conditions, the refrigerant compressor (12) is operable in at least two different operating modes, of which each provides an activation or deactivation of the cylinder banks (42) that is different from the other operating modes (B), **characterised in that** associated with the refrigerant compressor (12) is a frequency converter (132) for controlling the speed of the electric motor (60), **in that** associated with the refrigerant compressor (12) is an operating condition controller (130) that, in accordance with a performance request signal (LA) supplied to it for operation of the refrigerant compressor (12) in the partial performance condition corresponding to this performance request signal (LA), operates the refrigerant compressor (12) in an operating mode (B) that is selected from at least two different operating modes (B) and at a speed of the electric motor (60) adapted to the selected operating mode (B), for the purpose of achieving this partial performance condition.

2. A refrigerant compressor according to Claim 1, **characterised in that** the operating condition controller (130) operates the refrigerant compressor (12) in a first operating mode (B1), with activation of all the cylinder banks (42) and with adaptation of the speed of the electric motor (60) to the first operating mode (B1) and/or **in that** the operating condition controller operates the refrigerant compressor (12) in at least one further operating mode (B), with deactivation of at least one of the cylinder banks (42) and with activation of at least one of the cylinder banks (42) and with adaptation of the speed of the electric motor (60) to this operating mode (B).

3. A refrigerant compressor according to one of the preceding claims, **characterised in that**, in the case of partial performance conditions that are achievable by a plurality of the operating modes (B), the operating condition controller (130) selects the operating mode (B) that results in the highest quality grade or COP value or the lowest electrical power consumption of the electric motor (60) in this partial performance condition.

4. A refrigerant compressor according to Claim 3, **characterised in that** the operating condition controller (130) determines, for the operating modes (B) that are in each case possible for achieving a partial performance condition, the quality grade or the COP value or the electrical power consumption of the electric motor (60), and selects the operating mode (B) by comparing the determined quality grades or COP values or electrical power consumption.

5. A refrigerant compressor according to Claim 3 or 4, **characterised in that** the operating condition controller (130) has stored data for the purpose of determining the quality grade or COP value or electrical power consumption for each operating mode (B).

6. A refrigerant compressor according to one of Claims 3 to 5, **characterised in that** the quality grade or COP value or electrical power consumption is determined by the operating condition controller (130) by the detection of the suction pressure (PS) and/or of the high pressure (PH) at the refrigerant compressor (12).

7. A refrigerant compressor according to one of Claims 3 to 6, **characterised in that** the operating condition controller (130) makes use of the refrigerant, the partial performance condition, the power consumption and/or the speed of the electric motor (60) in order to determine the quality grade or COP value or electrical power consumption.

8. A refrigerant compressor according to one of the preceding claims, **characterised in that**, in order to determine the quality grade or COP value of the operating modes, the partial performance conditions that are to be achieved are divided into partial performance conditions that are above a boundary value (PHG) and those below a boundary value (PHG), and **in that** in the case of partial performance conditions above the boundary value (PHG) in operating modes (B) that require a relatively high speed of the electric motor (60) the assumption is made of a relatively high quality grade or COP value or a relatively low electrical power consumption and thus these are selected, and in the case of partial performance conditions below the boundary value (PHG) in operating modes (B) that require a relatively low speed of the electric motor (60) the assumption is made of a relatively high quality grade or COP value or a low electrical power consumption and thus these are selected.

9. A refrigerant compressor according to one of the preceding claims, **characterised in that**, in the case of a first type of operating modes, the operating condition controller (130) permanently maintains the respective operating mode (B) with a fixedly predetermined deactivation and activation of the cylinder banks (42) in order to achieve the partial performance condition that is required by the performance request signal (LA).

10. A refrigerant compressor according to one of the preceding claims, **characterised in that**, in at least one operating mode (B) corresponding to a second type of operating modes, the operating condition controller (130) operates the refrigerant compressor (12) by clocked deactivation and activation at least one of the cylinder banks (42) at defined switching intervals (SI), wherein in this operating mode (B) in particular the proportion of time for which at least one of the cylinder banks (42) is deactivated and activated at the switching intervals (SI) is constant when the respective partial performance condition is achieved.

11. A refrigerant compressor according to one of the preceding claims, **characterised in that** activation and deactivation of each cylinder bank (42) is performed with the aid of a mechanical performance control unit (70) that is controlled by the operating condition controller (130), in particular **in that** the mechanical performance control unit (70) is associated with a cylinder head (58) of the cylinder bank (42), in particular **in that** the mechanical performance control unit (70) controls an inlet stream (74) into the inlet chamber (72) of the cylinder head (58) for the purpose of activating or deactivating the respective cylinder bank (42).

12. A refrigerant compressor according to one of the preceding claims, **characterised in that** the performance control unit (70) connects the outlet chamber (164) to the inlet chamber (162) in the cylinder head (58) for the purpose of activating or deactivating the respective cylinder bank (42').

13. A refrigerant compressor according to one of the preceding claims, **characterised in that** the operating condition controller (130) is an operating condition controller that is separate from the frequency converter (132).

14. A refrigerant compressor according to one of the preceding claims, **characterised in that** the operating condition controller (130) is arranged in a housing (40) that receives the frequency converter (132).

15. A refrigerant compressor according to one of the preceding claims, **characterised in that** the cylinder banks (42) of the refrigerant compressor (12) work in a parallel operation.

16. A refrigerant compressor according to one of the preceding claims, **characterised in that** the refrigerant compressor (12) has at least two cylinder units (44) per cylinder bank (42), **in that** in particular the refrigerant compressor (12) has more than two cylinder banks (42).

17. A refrigeration system, comprising a refrigerant compressor (12), a heat exchanger (18) on the high-pressure side, an expansion member (30), and a heat exchanger (32) on the low-pressure side, **characterised in that** the refrigerant compressor (12) takes a form according to one of the preceding claims, **in that** in particular the refrigeration system (10) has a system controller (138) that generates the performance request signal (LA), **in that** in particular the operating condition controller (130) is arranged in a housing of the system controller (138).

## Revendications

1. Compresseur de réfrigérant (12) pour des installations frigorifiques (10) comprenant un moteur électrique (60), au moins deux rangées de cylindres (42) dont chacune présente au moins une unité de cylindres (44) avec respectivement au moins un logement de cylindre (46) et au moins un piston (48) entraîné et pouvant être déplacé de façon oscillante par le moteur électrique (60), ainsi qu'une tête de cylindre (58) attribuée à chaque rangée de cylindres (42) avec une chambre d'admission (72, 162) traversée par un flux d'admission (74) et une chambre d'évacuation (88, 164) traversée par un flux d'évacuation (86) et une unité de commande de puissance (70) mécanique pour l'activation et la désactivation d'au moins l'une des rangées de cylindres (42) afin d'activer ou de désactiver leur émission de réfrigérant,
dans lequel le compresseur de réfrigérant (12) peut être exploité pour le fonctionnement dans des états de puissance partielle dans au moins deux modes de fonctionnement différents dont chacun des modes de fonctionnement (B) prévoit une activation ou une désactivation différente des rangées de cylindres (42),
**caractérisé en ce qu'**un convertisseur de fréquence (132) est attribué au compresseur de réfrigérant (12) pour la commande du nombre de tours du moteur électrique (60), **en ce qu'**une commande d'état de fonctionnement (130) est attribuée au compresseur de réfrigérant (12), laquelle, en fonction d'un signal d'exigence de puissance (LA) amené à celle-ci pour le fonctionnement du compresseur de réfrigérant (12) dans l'état de puissance partielle correspondant à ce signal d'exigence de puissance (LA), exploite pour la réalisation de cet état de puissance partielle le compresseur de réfrigérant (12) dans un mode de fonctionnement (B) sélectionné parmi au moins deux modes de fonctionnement (B) différents, ainsi que d'un nombre de tours du moteur électrique (60) ajusté au mode de fonctionnement (B) sélectionné.

2. Compresseur de réfrigérant selon la revendication 1, **caractérisé en ce que** la commande d'état de fonctionnement (130) exploite le compresseur de réfrigérant (12) dans un premier mode de fonctionnement (B1) avec activation de toutes les rangées de cylindres (42) et avec un ajustement du nombre de tours du moteur électrique (60) au premier mode de fonctionnement (B1) et/ou **en ce que** la commande d'état de fonctionnement exploite le compresseur de réfrigérant (12) dans au moins un autre mode de fonctionnement (B) lors de la désactivation d'au moins l'une des rangées de cylindres (42) et de l'activation d'au moins l'une des rangées de cylindres (42) ainsi qu'avec un ajustement du nombre de tours du moteur électrique (60) à ce mode de fonctionnement (B).

3. Compresseur de réfrigérant selon l'une des revendications précédentes, **caractérisé en ce que** la commande d'état de fonctionnement (130), lors d'états de puissance partielle qui peuvent être réalisés par plusieurs des modes de fonctionnement (B), sélectionne le mode de fonctionnement (B) qui mène au degré qualitatif le plus élevé ou à la COP la plus élevée ou à la puissance électrique absorbée la plus basse du moteur électrique (60) dans cet état de puissance partielle.

4. Compresseur de réfrigérant selon la revendication 3, **caractérisé en ce que** la commande d'état de fonctionnement (130) établit le degré qualitatif ou la COP ou la puissance électrique absorbée du moteur électrique (60) pour les modes de fonctionnement (B) respectivement possibles pour la réalisation d'un état de puissance partielle, et sélectionne le mode de fonctionnement (B) par comparaison du degré qualitatif ou de la COP ou de la puissance électrique absorbée établi(e) du moteur électrique (60).

5. Compresseur de réfrigérant selon la revendication 3 ou 4, **caractérisé en ce que** la commande d'état de fonctionnement (130) a sauvegardé des données pour l'établissement du degré qualitatif ou de la COP ou de la puissance électrique absorbée pour chaque mode de fonctionnement (B).

6. Compresseur de réfrigérant selon l'une des revendications 3 à 5, **caractérisé en ce que** l'établissement du degré qualitatif ou de la COP ou de la puissance électrique absorbée par la commande d'état de fonctionnement (130) s'effectue par saisie de la pression d'aspiration (PS) et/ou de la haute pression (PH) au niveau du compresseur de réfrigérant (12).

7. Compresseur de réfrigérant selon l'une des revendications 3 à 6, **caractérisé en ce que**, pour l'établissement du degré qualitatif ou de la COP ou de la puissance électrique absorbée, la commande d'état de fonctionnement (130) prend en considération le réfrigérant, l'état de puissance partielle, la puissance absorbée et/ou le nombre de tours du moteur électrique (60).

8. Compresseur de réfrigérant selon l'une des revendications précédentes, **caractérisé en ce que**, pour l'établissement du degré qualitatif ou de la COP des modes de fonctionnement, les états de puissance partielle à réaliser sont subdivisés en des états de puissance partielle se situant au-dessus d'une valeur limite (PHG) et au-dessous d'une valeur limite (PHG), et **en ce que** lors d'états de puissance partielle se situant au-dessus de la valeur limite (PHG) pour les modes de fonctionnement (B) qui exigent un nombre de tours supérieur du moteur électrique (60), un degré qualitatif ou une COP plus élevé(e) ou une puissance électrique absorbée plus basse est admis(e) et ce faisant ceux-ci sont sélectionnés, et lors d'états de puissance partielle se situant au-dessous de la valeur limite (PHG) pour les modes de fonctionnement (B) qui exigent un nombre de tours inférieur du moteur électrique (60), un degré qualitatif ou une COP plus élevé(e) ou une puissance électrique absorbée plus basse est admis(e) et ce faisant ceux-ci sont sélectionnés.

9. Compresseur de réfrigérant selon l'une des revendications précédentes, **caractérisé en ce que**, pour un premier type de modes de fonctionnement, la commande d'état de fonctionnement (130) conserve en permanence le mode de fonctionnement (B) respectif avec désactivation et activation, prédéfinies de façon fixe, des rangées de cylindres (42) pour l'atteinte de l'état de puissance partielle exigé par le signal d'exigence de puissance (LA).

10. Compresseur de réfrigérant selon l'une des revendications précédentes, **caractérisé en ce que** la commande d'état de fonctionnement (130) exploite le compresseur de réfrigérant (12) dans au moins un mode de fonctionnement (B) correspondant à un second type de modes de fonctionnement par désactivation et activation cadencées d'au moins l'une des rangées de cylindres (42) à des intervalles de commutation (SI) définis, dans lequel dans ce mode de fonctionnement (B) en particulier la désactivation et l'activation au *pro rata temporis* d'au moins l'une des rangées de cylindres (42) dans les intervalles de commutation (SI) est constante lors de la réalisation de l'état de puissance partielle respectif.

11. Compresseur de réfrigérant selon l'une des revendications précédentes, **caractérisé en ce que** l'activation et la désactivation de chaque rangée de cylindres (42) s'effectue au moyen d'une unité de commande de puissance (70) mécanique commandée par la commande d'état de fonctionnement (130), en particulier **en ce que** l'unité de commande de puissance (70) mécanique est attribuée à une tête de cylindre (58) de la rangée de cylindres (42), en particulier **en ce que** l'unité de commande de puissance (70) mécanique commande un flux d'admission (74) jusque dans la chambre d'admission (72) de la tête de cylindre (58) pour l'activation ou la désactivation de la rangée de cylindres (42) respective.

12. Compresseur de réfrigérant selon l'une des revendications précédentes, **caractérisé en ce que** l'unité de commande de puissance (70) mécanique relie la chambre d'évacuation (164) à la chambre d'admission (162) pour l'activation ou la désactivation de la rangée de cylindres (42') respective dans la tête de cylindre (58).

13. Compresseur de réfrigérant selon l'une des revendications précédentes, **caractérisé en ce que** la commande d'état de fonctionnement (130) est une commande d'état de fonctionnement séparée du convertisseur de fréquence (132).

14. Compresseur de réfrigérant selon l'une des revendications précédentes, **caractérisé en ce que** la commande d'état de fonctionnement (130) est agencée dans un logement (40) recevant le convertisseur de fréquence (132).

15. Compresseur de réfrigérant selon l'une des revendications précédentes, **caractérisé en ce que** les rangées de cylindres (42) du compresseur de réfrigérant (12) travaillent dans un fonctionnement en parallèle.

16. Compresseur de réfrigérant selon l'une des revendications précédentes, **caractérisé en ce que** le compresseur de réfrigérant (12) présente au moins deux unités de cylindres (44) par rangée de cylindres (42), **en ce qu'**en particulier le compresseur de réfrigérant (12) présente plus de deux rangées de cylindres (42).

17. Installation frigorifique comprenant un compresseur de réfrigérant (12), un échangeur de chaleur (18) côté haute pression, un organe expansible (30) et un échangeur de chaleur (32) côté basse pression, **caractérisé en ce que** le compresseur de réfrigérant (12) est conçu selon l'une des revendications précédentes, **en ce qu'**en particulier l'installation frigorifique (10) présente une commande d'installation (138), laquelle produit le signal d'exigence de puissance (LA), **en ce qu'**en particulier la commande d'état de fonctionnement (130) est agencée dans un logement de la commande d'installation (138).
